# EUROPÄISCHE PATENTSCHRIFT

(11) **EP 3 458 209 B1**
(45) Veröffentlichungstag und Bekanntmachung des Hinweises auf die Patenterteilung: **12.08.2020**
(21) Anmeldenummer: 16831701.4
(22) Anmeldetag: 04.11.2016
(51) Int. Cl.: B22D 17/22, B22C 9/06, B29C 45/72

(54) **VERFAHREN UND VORRICHTUNG ZUR FLÄCHENHAFTEN KONTURNAHEN TEMPERATUR-REGELUNG DER TEMPERIER-OBERFLÄCHE SCHALENFÖRMIGER FORMWERKZEUGE BEI MITEINANDER KOMMUNIZIERENDEN MEDIEN IN POLYEDERARTIGEN RÄUMEN**
METHOD AND DEVICE FOR OVERALL TEMPERATURE-CONTROL CLOSE TO THE MOULD CAVITY OF TEMPERATURE-CONTROLLED SHELL-TYPE MOULDS, USING INTERCOMMUNICATING MEDIA IN POLYHEDRAL SPACES
PROCÉDÉ ET DISPOSITIF DE THERMORÉGULATION RÉPARTIE EN SURFACE ET PRÉCISE EN CONTOURS DE LA SURFACE DE THERMORÉGULATION DE MOULES POUR DES FLUIDES COMMUNIQUANT DANS DES ESPACES EN FORME DE POLYÈDRE

(30) Priorität: 04.11.2015 DE 102015118901
(43) Veröffentlichungstag der Anmeldung: 27.03.2019
(73) Patentinhaber: Schmidt, Torsten, 09456 Annaberg-Buchholz (DE); Richter, Uwe, 04932 Gröden (DE)
(72) Erfinder: RICHTER, Uwe, 04932 Gröden (DE)
(74) Vertreter: Weissfloh, Ingo
(86) Internationale Anmeldenummer: PCT/DE2016/100524
(87) Internationale Veröffentlichungsnummer: WO 2017/076399

(56) Entgegenhaltungen:
- CN-U- 204 817 991
- DE-A1-102010 007 812
- DE-A1-102012 024 051
- DE-A1-102014 001 563
- DE-A1-102014 223 922
- JP-A- H07 284 901
- JP-A- S62 130 762
- JP-A- 2003 001 378

## Beschreibung

Die Erfindung betrifft ein Verfahren zur Verbesserung der konturnahen Temperierung schalenförmiger Formwerkzeuge. Diese Temperierung erfolgt durch Kühlung und/oder durch externes Heizen des schalenförmigen Formwerkzeuges von dessen Rückseite her. Dazu kann das schalenförmige Formwerkzeug so ausgebildet sein, dass dessen Rückseite der Kontur bzw. Gravur weitestgehend folgt. Dabei ist ein schalenförmiges Formwerkzeug ein Formwerkzeug, das im Vergleich zu herkömmlichen Formwerkzeugen durch viel dünnere Formwänden ausgezeichnet ist. Die Bezeichnung der Einzelteile eines schalenförmigen Formwerkzeugs wird unterschiedlich gehandhabt. Dabei ist das schalenförmige Formwerkzeug wie jedes andere Formwerkzeug mindestens zweiteilig. Ein Teil besteht grundsätzlich jeweils mindestens aus einem Massivbereich und einer Formwerkzeug-Randschale.

Die konturnahe Positionierung von Vorrichtungen zur Wärmeübertragung und dadurch die schnellere Temperierung der zu formenden Werkstücke ist durch eine Formwerkzeug-Randschale besser möglich als bei herkömmlichen Formwerkzeugen.
Polyederartige Räume auf der Rückseite der Formwerkzeug- Randschale erlauben eine flächenhafte und örtliche Temperierung, bei der fluide Phasen der Kühl- und Heizmittel miteinander kommunizieren können.

Das erfindungsgemäße Verfahren kann zur konturnahen flächenhaften Temperierung von schalenförmigen Formwerkzeugen eingesetzt werden. Dabei erfolgt die Temperierung über die Temperier-Oberfläche der Formwerkzeug-Randschale. Sie stellt die Rückseite der Formwerkzeug- Randschale dar.

Das Verfahren betrifft die Temperierung von Gieß-Werkzeugen für den Druckguss. Es kann aber auch für den Niederdruck- und Schwerkraft- Kokillenguss, Spritzguss, sowie für Formwerkzeuge der Herstellung von Glasteilen eingesetzt werden. Weiterhin können Formwerkzeuge der Umform-Technik mit dem erfindungsgemäßen Verfahren temperiert werden.

Die extern einzubringende Heizenergie bzw. die über Kühlung abzuführende Energie wird als thermische Energie verstanden. Entsprechend des neuen Verfahrens kann sie örtlich je nach technologischen Anforderungen angepasst werden. Das Verfahren betrifft vorzugsweise metallische Formwerkzeuge. Dabei kann das Formwerkzeug mehrteilig sein, das Verfahren betrifft auch bewegliche oder unbewegliche Schieber und Kerne.

Mit dem Verfahren können gezielt die mechanischen Eigenschaften des zu formenden Werkstückes beeinflusst und verbessert werden. Weiterhin wird durch die Anwendung der erfindungsgemäßen Temperierung gezielt die Verbesserung der Füllung der Kavität des Formwerkzeuges, das heißt dessen Formhohlraum möglich. Dabei ist die exakte Füllung dünner und ebenso dickerer Hohlräume der Kavität möglich. Des Weiteren können bei Anwendung des Verfahrens gezielt die thermisch-mechanischen Spannungen des Formwerkzeuges selber reduziert werden. Dessen Gravur, das ist die Vorderseite der Formwerkzeug-Randschale, ist weniger anfällig für Verschleiß als bei bekannten Verfahren des Standes der Technik.

Das Verfahren betrifft solche Formprozesse, bei denen die thermische Energie des Prozesses, das heißt die im Formprozess eingebrachte Prozesswärme, größtenteils über die Temperier-Oberfläche der Formwerkzeug-Randschale und damit über den Formwerkzeug-Rückraum abgeführt werden muss, entsprechende Aggregatzustands-Änderung inbegriffen. Kleinere Beträge der Abgabe von thermischer Energie des Prozesses erfolgen als Verluste über den Massivbereich des Formwerkzeuges an die Formmaschine und die Umgebung oder ähnlichem. Diese werden nicht betrachtet, ebenso der Wärmeinhalt des aus der Kavität entnommen, noch heißen aber formstabilen Werkstücks.

Ebenso kann Teilbereichen der Temperier-Oberfläche gezielt externe thermische Energie in Form von Heizenergie über den Rückraum zugeführt werden.

Die Temperierung der Temperier-Oberfläche ist mit fluiden Medien möglich.

Das klassisch übliche Verfahren zur Kühlung von Gieß-Werkzeugen für den Druckguss stellt im Wesentlichen eine zweifache Kühlung dar. Da nicht die gesamte Prozesswärme, das heißt die Wärme bis das Werkstück entfernt wird, über die Kühlung des Rückraums des Formwerkzeuges abgeführt werden kann, muss die Gravur bzw. Kontur, also die Werkzeugoberfläche, nach der Entnahme des Gussteils zusätzlich gekühlt werden. Abweichend vom Kühlen in jedem Prozess-Zyklus erfolgt das Beheizen des Formwerkzeuges meistens nur im Anfangsstadium des Gesamtprozesses, im Sinne des Vorwärmens des Formwerkzeuges. Dadurch sollen Schädigungen der Gravur durch zu hohe thermische Gradienten während des ersten Formprozesses vermieden werden. Das kann über Erwärmen der Gravur mit Heizstrahlern o.ä. bzw. über Erwärmen vom Rückraum her über das Durchleiten von heißen Fluiden durch die dort eingebrachten Kühlkanäle erfolgen.

Zum ersten erfolgt die klassische Kühlung über das Einbringen von Kühlgeometrien in den Rückraum des Formwerkzeuges. Das geschieht in Form von geraden Bohrungen nach der Art von Durchgangsbohrungen und Sacklöchern, die meist mit erodierenden und spanenden Methoden eingebracht werden. Durch diese Bohrungen wird Kühlfluid geleitet. Das Kühlfluid durchströmt daher die Bohrungen in der Art einer Kanalströmung. Die eingebrachten Kanalgeometrien müssen einen gewissen Abstand zur Gravur haben. Auch der Abstand benachbarter Kanäle muss Mindestmaße aufweisen. Kanalabmessungen, Strömungsführung, sowie Eigenschaften des Temperier-Mediums, wie Wasser oder ÖL und des Formwerkzeugmaterials bestimmen die übertragbare Wärmemenge. Hierbei sind für die Kühlung meist große geometrische Einschränkungen gegeben, da die gleichmäßige Kühlung einer geometrisch sehr wechselnden Gravur mittels gerade verlaufender Kühlkanäle oder Sacklöcher für nahezu punktuelle Kühlungen, nur beschränkt möglich ist.

Speziell die Kühlung vom Rückraum her ist nicht ausreichend. Es wird daher zum zweiten die Kühlung über die Kontur bzw. Gravur durchgeführt: Nach der Entnahme des Gussteiles aus der Kavität wird auf die Gravur längere Zeit mit hohem Druck ein Trennmittel-WasserGemisch mit dem Träger Luft gedüst und dadurch die Temperatur der Formwerkzeugoberfläche und des Formwerkzeuges weiter abgesenkt. Das Wasser ist mit Trennmittel versetzt, das ein Ankleben des Gießmetalls an der Formwerkzeugoberfläche verhindern soll. Die Formwerkzeugoberfläche wird durch diese schockartige Kühlung und die nachfolgende schockartige Erwärmung durch Zugabe der heißen Schmelze auf die Gravur erhöhtem Verschleiß ausgesetzt.

Zur Verbesserung dieses Zustandes der klassischen zweifachen Kühlung von Formwerkzeugen sind in der Patentliteratur Bemühungen zur Herstellung von relativ dünnen Formwerkzeug-Masken für Formwerkzeuge erkennbar. Sie sollen der Kontur des Werkstückes folgen und dieses dadurch konturnah temperieren, meistens kühlen. Aus der Patentliteratur wird deutlich, dass durch die angestrebte Konturnähe des Kühlsystems das Formwerkzeug allein vom Rückraum her gekühlt werden und die zusätzliche Kühlung über die Gravur entfallen soll. Das Formwerkzeug soll als Maske ausgebildet werden. Hinter der Maske befindet sich ein Temperierbereich. Da die Formwerkzeug-Masken dünn sind, gibt es weiterhin einen Massivbereich des Formwerkzeuges. Über diesen soll die Stabilität garantiert werden. Man hat durch diese Anordnung ein konturnah gekühltes dünnes Formwerkzeug.

Eine die Kontur des Werkstücks abbildende und den Formhohlraum begrenzende Maske wird in DE 10 2012 024 051 A1 offenbart. Direkt unter der Maske befinden sich mehrere Hohlräume zum Durchleiten der Temperierflüssigkeit. An diesen Temperierbereich schließt sich dann der Massivbereich der Druckgießform an. Die Maske wird über Stützen am Massivbereich abgestützt. Abstützfunktion übernehmen auch Auswerfer-Aufnahmeeinheiten, die gegen den Temperier-Hohlraum flüssigkeitsdicht abgedichtet sind. Die Abstützungseinheiten der Maske sind untereinander verschraubt, um eine hohe mechanische Sicherheit des Formwerkzeuges zu garantieren. Es wird betont, dass flüssige und gasförmige Fluide zur Kühlung verwendet werden können.

In der EP 1 403 029 A1 wird ein konturnah kühlbares Formwerkzeug mit flachen Kühlkanälen offenbart, die nahe hinter der Kontur der Kavität liegen und dieser folgen. Diese werden mit Kühlfluid durchströmt.

Die DE 10 2006 008 359 B4 offenbart ein Gieß-Werkzeug, dass selbst auch durch Gießen hergestellt wird. Es stellt ein in einem Schritt hergestelltes Negativ des Gussteils, inklusive konturnaher-Kühlgeometrie dar. Dazu hat das Formwerkzeug im Rückraum Versteifungsrippen, die eine Unterteilung in Kühlstellen erlauben. Diese können einzelnen oder kaskadenartig mit Fluiden durchströmt werden. Die Absicht ist, dass je nach Wärmeanfall im Gussteil mit Kühl- oder Heizmittel gekühlt bzw. geheizt werden kann. Entsprechend dem Erfinder und der Darstellung erfolgt die Durchströmung klassisch kanalartig. Die Erfindung hat Schwachstellen: Die gewollte Strömungsführung - mit Zu- und Abgängen der Strömung in den Segmenten - würde nicht regelbare, sehr schwach durchströmte Ecken und Kanten in den einzelnen Segmenten ergeben. Das resultiert schon aus der Konturnähe des Kanals und seiner stark unregelmäßigen Kanalbasis, die ja der Kontur folgen soll. Dies würde Anlass zum Abreißen der Strömung und schlechten Durchströmen bis hin zu Toträumen geben. Der Kanal würde sich dort stark aufheizen. Sollte die Kühlung druckoffen sein, so würden sich Dampf-Wassergemische an den überhitzten Kanalstellen bilden, die sich in Richtung Öffnung des Kühlsystems entladen würden. Sollte die Kühlung geschlossen sein, würde die örtliche Erhitzung, beispielsweise auf ca. 700 °C beim Aluminiumguss, zu einer starken Druckerhöhung führen, denn der Druck könnte sich auf Grund der Geschlossenheit des Systems nicht abbauen.

Die DE 12 16 496 B beschreibt eine Matrize in Form einer äußeren Hülle bzw. Schale, die auf galvanoplastischem Wege erzeugt wird, an deren innerer Oberfläche eine Packung körnigen gesinterten Metalls aufgebracht wird. Diese Sinterkörnung soll ähnliche physikalische Eigenschaften haben wie das Metall der Matrize, wie z.B. Schrumpfung bzw. Leitfähigkeit. In diese Packung können Kühlschlangen eingebracht werden. Dann wird in die Packung niedrig schmelzendes Metall im Schleuderguss gegossen. So soll Schwindung und Spaltbildung zur Matrize verhindert werden können. In DE 10 2005 030 678 A1 wird eine Formschale mit Hinterfütterung offenbart. In die Hinterfütterung werden Kanalstrukturen, Stoffschichten, offenporige Strukturen und wärmeleitfähige Massen eingebracht. Die Kombination dieser Elemente im Rückraum der Formschale soll eine gleichmäßige Temperatur ergeben. Das Werkzeug wird allein durch diese Vorrichtungen mehrteilig. Über die Hinterfütterung und deren Gewährleistung der Stabilität des Werkzeuges wird keine Aussage getroffen. Auch auf die sehr wahrscheinlich schlechten Wärmebergänge der eingebrachten Temperier-Elemente wird nicht eingegangen.

Die DE 10 2005 030 814 B4 offenbart die Herstellung einer Gussmaske, die die äußere Kontur des Gussteils hat. Daran wird aus einem Metall oder einer Legierung ein Massivbereich angegossen. In diesen können die vorher an der Gussmaske befestigten Metall-Kühlrohre stoffschlüssig eingegossen werden. Es werden Legierungen bevorzugt, die einen Schmelzpunkt unterhalb dem der Maske haben. Über Schwierigkeiten der stoffschlüssigen Anbindung an die Gussmaske wird nicht berichtet.

In der DE 10 2007 005 257 A1 wird eine kühlbare Formmatrize zum Formhärten eines Werkstücks, welche aus zwei Teilen besteht, beschrieben. Der erste Teil ist als Kontur gebende Formschale ausgebildet. Der zweite Teil ist als Kern ausgebildet. Zwischen Kern und Formschale befindet sich ein Kühlhohlraum, durch den ein Kühlmedium zur Kühlung des Werkstücks strömt.

Die WO 2011026162 A1 beschreibt ein Spritzgieß-Werkzeug, in dem ein Hohlraum hinter einer Formschale angeordnet ist, der zum Durchleiten von Kühlfluid dient. Dahinter befindet sich der Massivbereich des Formwerkzeuges als Widerlager. Zur Abstützung gegen die beim Formprozess auftretenden Kräfte ist der Kühlhohlraum zwischen Formschale und Massivbereich mit einer Stützschicht gefüllt. Dadurch werden die Kräfte beim Formgebungsprozess auf den Massivbereich hinter dem Kühlhohlraum übertragen. Das KühlMedium, das Wasser oder Öl o.a. sein kann, durchströmt diese Stützschicht und soll somit die Wärme von der Formschale abführen.

Auch über die Kühlung kleiner Formwerkzeug-Bereiche wird berichtet. Die JP2003164957A, die JP2004154796 und die JP2007307593 A stellen Lösungen vor, deren Anliegen die Kühlung von kleinen, bohrlochartigen Bereichen der Druckgussform darstellt. Ein Doppelrohr-Kühleinsatz, bestehend aus einem Innen- und einem Außenrohr, wird über ein Bohrloch vom Rückraum her in das Formwerkzeug eingebaut. Das Bohrloch reicht bis wenige Millimeter an die Gravur der Gießform heran. Durch das dünne Innenrohr wird in Form eines Freistrahls ein Kühlfluid, beispielsweise Wasser oder ein Wasser- Luft-Gemisch, von einer Pumpe unter erhöhtem Druck auf die Stirnseite des Bohrloches geleitet. Das rückströmende Fluid gelangt über das weiter hinten angeordnete Außenrohr des Doppelrohrs in die Kühlanlage zurück. Diese oft als "jet cooling" bezeichnete Kühlung ist jedoch nur für kleine Bereiche der Kontur des Formwerkzeuges in Form der Stirn des Bohrloches geeignet und nicht für durchgehende, flächige und ausgedehnte Bereiche der Formwerkzeug-Gravur. Sie wird zur Kühlung von hot spots eingesetzt. Diese Punktkühlung über die Bohrloch-Stirn, bzw. die sehr kleinen Stirn-Fläche der Bohrung ist freilich konturnah. Eine größer-flächige, gleichmäßige Wasser-Belegung mit einem Freistrahl, die von der Bohrlochstirn oder kleinen kreisförmigen Flächen abweicht, ist schwer möglich. Hauptcharakteristik des Freistrahls ist der Austritt eines einzelnen Strahls aus einer Düse in ein flüssiges oder gasförmiges Medium. Je nach verwendeter Düse weitet er sich mit zunehmender Entfernung von der Düse auf. Auf größere Flächen, wie es die Stirn eines Bohrlochs o.ä. darstellt, wird der Freistrahl nach dem Auftreffen auf dieser unkontrolliert verspritzen. Eine gleichmäßige Benetzung flächiger Konturen, ferner noch mit einem nahezu einheitlichen flüssigen Film, ist mit dem Freistrahl völlig unmöglich. Zudem sind konturnahe Bereiche in den allermeisten Fällen eher sehr wechselhaft, weil die Temperierfläche konturnah der Gravur folgt. Die Temperierfläche ist in ihrer Oberflächengeometrie stark wechselnd. Weiterhin sind immer kantige Bereiche bzw. Ecken stark wechselnder Geometrie auf der Temperierfläche zu finden, wo das breitspritzende Kühlwasser eines Freistrahls sich verwirbeln würde, die Temperierfläche nichtbenetzend überströmen würde oder sich Toträume bilden würden.

Daher ist eine gleichmäßige vollständige Benetzung flächig unregelmäßiger und größerer Bereiche unmöglich: Es wäre eine stabile Regelung der Temperierfläche hinsichtlich deren Temperaturregelung und Übertragung entsprechender gewollter Wärme bzw. Kühlintensität nicht möglich. Zielgruppe des Freistrahls in der Formtechnik sind hot spots und aus dem Werkzeug hervorstehende schmale Kerne, bei denen sich eine Bohrung geometrisch anbietet und die Kühlung mit einem Freistrahl vorteilhaft ist. Deshalb ist der jet-Stahl auf bohrlochartige Vertiefungen, wie es auch aus den vornehmlich japanischen Zitaten der Patentliteratur hervorgeht, beschränkt.

Weiterhin sind Formwerkzeuge offenbart, in deren Konturnähe ein Kühlsystem eingegossen wird, das vorher extern gefertigt wurde. Die DE 10 2010 017 014 A1 beschreibt ein Verfahren zur konturnahen Anordnung extern gefertigter Kühlkanal-Geometrien. Diese können ein von der klassischen runden Rohrquerschnitts-Geometrie abweichendes Aussehen besitzen. Das Formwerkzeug wird konturnah bis zur Stärke einer Schale freigestellt, beispielsweise durch Fräsen oder Erodieren, und die vorher gefertigte Kühlkanal-Geometrie an der von der Kontur abgewandten Schalenseite, also im Rückraum, befestigt. Abschließend wird die Kanalgeometrie in den Rückraum des Formwerkzeuges eingegossen. Das zur Herstellung der Kühlgeometrie benutzte Verfahren ist ein generatives bzw. 3D-Verfahren: Selektives Laserschmelzen. Es können beliebige Geometrien hergestellt werde. Das Verfahren ist aber auf kleinere Baugrößen mit einem Bauraum von ca. 200 x 200 x 200mm begrenzt. Mit dem MPA-Verfahren, einem Beispiel für ein thermisches Spritzverfahren sind Baugrößen bis 500mm Durchmesser herstellbar. Zurzeit können noch keine größeren Werkzeugformen aus Werkzeugstahl in Gänze hergestellt werden. Es werden eher kleinere Teile von Werkzeugformen hergestellt, wie Kerne und Schieber. Diese können mit Kühlkanälen ausgestattet werden.

In der DE 741 76 10 U wird ein konturnahes Heiz-Kühlsystem vorgeschlagen. Heiz- und Kühlkanäle werden separat vom Formwerkzeug in einem Block eingebracht. Dazu dienen nahe beieinander liegende Bohrungen. Es können für die Heizseite Kühlflüssigkeiten aber auch elektrische Heizelemente verwendet werden. Zum Kühlen werden Wasser und Öl bevorzugt. Die Wandungen der Heiz-und Kühlleitungen sind eng aneinander angeordnet. Der extern mit dem Heiz-Kühlsystem ausgestatte Block wird dann in das Formwerkzeug eingebaut.

Weiterhin wird ein Verfahren zur konturnahen Kühlung von Kernen und Formwerkzeugen für Druck-und Spritzgussformen in DE 10 2012 10 68 71 B4 offenbart. Dazu wird der Rückraum vorher bis zu einer Schale freigestellt. Für die Kühlung und Heizung werden separate Rohrsysteme bzw. durchströmbare Kühlgeometrien und elektrische Heizelemente vorgeschlagen. Beide sind, geometrisch eng aneinander liegend, an der Rückwand verlegt. Nach der Befestigung an der Schale im Rückraum des Formwerkzeuges werden diese dort vergossen.

Die DE 101 59 456 A1 beschreibt ein konturnahes Formwerkzeug, in dem ein Rohr konturnah im vorher freigestellten Rückraum eines Formwerkzeuges verlegt wird. Dieses wird mit demselben Material des Formwerkzeugs formschlüssig vergossen. Schwierigkeiten der stoffschlüssigen Anbindung an das Formwerkzeug werden nicht erwähnt.

Eine weitere Möglichkeit, geometrisch frei wählbare Kühl-Kanäle in das Formwerkzeug einzubringen, beschreibt AT 512 091 A1. Es handelt sich um ein lamellenartig aufgebautes Formwerkzeug. Mit aneinander gesetzten Metall-Lamellen, wie beispielsweise Warmarbeitsstahlblechen, wird ein Formholraum abgebildet, wie in einem herkömmlichen Druckgieß-Werkzeug. Ziel ist hierbei das Einbringen frei wählbarer, konturnaher Kanäle zur Möglichkeit des Durchströmens mit Kühlflüssigkeiten. In den einzelnen Lamellen kann die Kanalgeometrie relativ zu den benachbarten Lamellen verändert werden. So erfolgt in Lamellenstärke die Änderung der Kanalgeometrie. Für die Zusammenstellung der Lamellen zum fertigen Blechpaket, bzw. zum Formwerkzeug, werden Verschrauben, Löten, Schweißen, Verkleben und einfaches Aneinanderpressen der Lamellenpakete vorgeschlagen.

In der DE 28 50 229 A1 wird eine Kühlung über Verdampfung von Kühlwasser in kommunizierenden Nebenkanälen vorgeschlagen. Es gibt zunächst Hauptkanäle, von denen die Nebenkanäle konturnah an die Rückseite der Formwerkzeugoberfläche reichen. Die Hauptkanäle sind an ein Pumpsystem mit Kühlwasser angeschlossen. Die Temperatur des Kühlmediums Wasser im Hauptkanal wird bei 200 °C und dem dieser Temperatur entsprechenden erhöhten Druck gehalten. Die Regulierung des Soll-Druckes erfolgt durch Einstellen eines Überdruckventils. In den Nebenkanälen findet nun bei thermischer Einwirkung im Formprozess die Flüssigkeitsverdampfung bei gegebenem Druck statt. Der Dampf steigert den Druck, das Druck-Ventil öffnet und entlässt den Überdruck in einen Behälter. Durch eine Pumpe wird nun aus dem Behälter genau so viel kaltes Kühlwasser in den Hauptkanal nachgespeist, wie bei der Kühlung in den Nebenkanälen verdampft. So soll auf eine Temperatur-Regelung des Kühlwassers in den Kanälen verzichtet werden können. Die DE 35 02 895 A1 offenbart ein Formwerkzeug zur verbesserten Wärmeabfuhr in Druckgießformen. Dieses ist von der Rückseite her schalenförmig ausgearbeitet und verläuft in den Massivbereich des Formwerkzeuges. Abgeschlossen ist der Massivbereich im Rückraum durch ein Abschlussteil bzw. eine Abschlussplatte. Es wird somit eine Wärmeaustauschkammer zwischen Schale und Abschlussplatte gebildet. Je nach Dicke des Gussteils und dessen abzuführender Wärme wird die Wanddicke der Schale gestaltet. Dies erfolgt dabei umgekehrt proportional. Je nach Dicke der Schale und des Gussteils wird an der betreffenden Stelle wenig oder viel Wärme pro Zeiteinheit über die Schale abgeführt. Im Innern der Wärmeaustauschkammer befindet sich ein flüssiges Wärmetauschmittel unter Hochdruck. Damit ist meist Wasser, welches unter Hochdruck steht, gemeint. Infolge des Gießens soll Wasser an der zur Kavität gelegenen Wand der Wärmeaustauschkammer verdampfen und dadurch die Gießwärme abgeführt werden. Es soll nur so viel Wasser in die Hochdruckkammer nachgefüllt werden, wie in der Wärmeaustauschkammer verdampft wurde. Das verdampfende Wasser soll durch ein Ventil abgeführt werden. Durch ein anderes Ventil wird in entsprechender Menge flüssiges Wasser der Wärmeaustauschkammer zugeführt. Dadurch soll nur ein minimaler Wasseraustausch in der Hochdruckkammer nötig sein. Das Kühlmittel Wasser wird demzufolge absatzweise bzw. diskontinuierlich der Wärmeaustauschkammer zugeführt, entsprechend des entwichenen Dampfes.

Die EP 2388086 beschreibt in ähnlicher Weise dazu eine schalenförmig ausgearbeitete Wärmeaustauschkammer zur Temperierung von Druckgussformen mit flüssigem Fluid. Das durch die Wämeaustauschkammer fließende Fluid überströmt die Schale strömungsgünstig.

So wird in der EP 0 033 901 A1 ein verbessertes Verfahren der konturnahen Kühlung von Druckgießformen über dünnwandige Formschalen aus einem metallischen Werkstoff hoher Wärmeleitfähigkeit offenbart. Von einem hinter den Formschalen angrenzenden Kühlraum der Druckgießform wirkt auf die dünnwandigen Formschalen das Kühlmittel in Form von verdampfbaren Flüssigkeiten ein. Dieses wird über Düsen an die Formschalen gespritzt. Beim Kühlvorgang kann es an der Formwand in den dampfförmigen Zustand übergehen. Durch axiale Verschiebbarkeit der Düsen soll intensiveres oder weniger intensives Kühlen bestimmter Partien der Formschale ermöglicht werden.

Im größten Teil der bisherigen Lösungen zur konturnahen Kühlung von Formwerkzeugen werden Kühl-Geometrien vorgeschlagen, die meist hinter einer Formwerkzeug-Maske angeordnet sind. Diese können geometrisch anders geformt als der klassische Rohrkanal sein und der Kontur der Kavität folgen. Ihre prinzipielle Art der Durchströmung ist die des Kanals. Dabei strömt Kühlfluid von einem Kanal-Eingang zu einem Kanal-Ausgang. Ebenso gehören dazu die vorgeschlagenen Kühl-Segmente, welche auf der Rückseite einer Formwerkzeug-Maske einzelne Kammern enthalten. Hier durchströmt das Kühlfluid die einzelnen Kammern ebenfalls kanalartig von einem Kammer-Einlass zu einem Kammer-Ausgang. Oder es werden konturnah angeordnete Kühleinsätze und Kühlrohre für den Rückraum des Formwerkzeuges vorgeschlagen, die ebenfalls kanalartig durchströmt werden. Auch die lamellenartig aufgebauten Formwerkzeuge haben das Einbringen kanalartiger Kühlstrukturen zum Ziel. Nach der DE 28 50 229 A1 strömt das Wasser durch konturnahe Nebenkanäle, selbst wenn es zum Teil dort verdampfen soll.

Weiterhin ist bei den bisherigen Lösungen zur kanalartigen konturnahen Kühlung charakteristisch, dass sich das Kühlmedium auf seinem Strömungs-Weg vom Einlass zum Auslass auf der heißen Wand zunehmend erwärmt. Das ist gewollt. Im Allgemeinen fließt fortwährend von der Gravur des Formwerkzeuges dem Kühlkanal thermische Energie ab oder zu. Eine gleichmäßige Kühlung größerer zusammenhängender geometrischer Bereiche mit einem Kühlfluid gleicher Ausgangstemperatur ist daher nicht möglich. Das Kühlfluid in Kanälen ändert stetig seine Temperatur. Sein Potential Wärme aufzunehmen wird dadurch ständig verändert. Selbst wenn nach DE 28 50 229 A1 das Kühlfluid in den Kanälen verdampft: Wenn die Verdampfung abgeschlossen ist, kann es nur beschränkt zur weiteren Regulierung einer einheitlichen oder gewollt gerichteten Kühlung taugen. Zudem wird eine vollständige Verdampfung nicht stattfinden. Vielmehr wird sich ein Wasser-Dampf-Gemisch bilden, das pfropfenförmig durch die Kanäle geschoben wird, bis es im Hauptkanal kondensiert. Danach kann Wasser in die Nebenkanäle nachlaufen, wo es wieder ein Wasser-Dampf-Gemisch bildet. Es wird eine Art oszillierende Bewegung von Wasser und Wasser-Dampf-Gemisches geben. Eine homogene Benetzung der Kühloberfläche wird daher nicht stattfinden. Ein Fluid in unterschiedlichen Aggregatzuständen bewegt sich im Kanal hin- und her. Eine stabile Kühlung wird nicht zustande kommen.

Weiterhin ist für kanalartig durchströmten Geometrien charakteristisch, dass diese Geometrien während des gesamten Prozesses vollständig mit Wasser gefüllt sind. Durch die ständige Gegenwart des Kühlfluides wird immer thermische Energie mit der Wandung ausgetauscht, d.h. der Wärmeaustausch kann nicht abgestellt werden. Es werden in bisherigen Lösungen zur konturnahen Kühlung keine Möglichkeiten angegeben, die zur schnellen und vollständigen Entfernung des Kühlfluids aus der Kühlgeometrie hinter der Formwerkzeug-Randschale oder den konturnah eingegossenen kanalartigen Kühleinsätzen dienen. Es wird auch keine Notwendigkeit diskutiert, das Kühlfluid nach einem Arbeits- bzw. Prozesszyklus aus diesen kanalartig durchströmten Geometrien vollständig zu entfernen. Die Geometrien werden kanalartig durchströmt und das Kühlfluid wird weitergeschoben. Das trifft auch für das teilweise verdampfende Kühlwasser in DE 28 50 229 A1 zu, das bei geschlossener Kühlung ein unter Druck stehendes, hin und her schwingendes Wasser-Dampf-Gemisch darstellt. Das gilt im Wesentlichen auch für den Typ einer diskontinuierlichen Kühlung, bei der das Kühlfluid in der Kühl-Geometrie in gewissen Zeitabständen stehen bleibt und danach weiterbewegt, jedoch nicht aus dieser entfernt wird. Im diskontinuierlichen Zustand stehendes Wasser läuft Gefahr, unter plötzlicher Einwirkung thermischer Energie einen für eine Temperaturregelung schwer regelbaren zweiphasigen Zustand einzunehmen, da die Kühloberfläche konturnah ist. Plötzliche, starke Temperaturgradienten sind durch Konturnähe sehr wahrscheinlich. Im Falle eines zur Atmosphäre geschlossenen Kühlsystems würde die plötzliche Temperatursteigerung von einer starken Drucksteigerung begleitet werden. Weiterhin ist es in kanalartigen Kühlgeometrien nicht möglich, dass die Kühl- bzw. Temperierbehandlung mit verschiedenen Möglichkeiten der Übertragung von Wärme bzw. Kühlintensität an einer gegebenen Stelle des Formwerkzeuges erfolgen kann, denn das Kühlmittel wird sich auf seinem Weg durch die kanalartige Geometrie, sowie abhängig von der Zeit, in seiner Temperatur zunehmend verändern. Im Allgemeinen wird es sich auf dem Weg vom Eingang zum Ausgang ständig erwärmen. Durch das Vorhandensein der kanalartigen Kühlgeometrie ist eine wechselnde Temperierung bzw. der Kühlung nachfolgende Heizung durch externe Heizer und umgekehrt an ein und demselben Ort des Werkezuges nicht möglich. Sind Heizung und Kühlung, wie beispielsweise in der DE 741 76 10 U lokal nebeneinander und örtlich getrennt angeordnet, wird durch die einsetzende Heizung das Kühlmedium in der Kühlgeometrie immer beeinflusst werden.

Infolge dieser fehlenden Möglichkeit, das Kühlfluid aus den kanalartigen Kühlgeometrien zu entfernen, ist es ausgeschlossen, zeitlich gezielt die Kühlung zu beenden, da das Kühlmittel im Kanal verbleibt.

Selbst der Wärmeaustauschkammer gemäß der DE 35 02 895 A1 muss diskontinuierlich Wasser zu- und abgeführt werden. So wird kaum ein kleiner Teil des Wassers der Wärmeaustauschkammer bei Wärmeeintrag durch den Gießprozess verdampfen und der Rest flüssig bleiben. Das gesamte Wasser in der Wärmeaustauschkammer wird sich vielmehr bis zum eingestellten Öffnungsdruck des Ausgangsventiles erwärmen. Sollte kein druckgesteuertes Ausgangsventil vorhanden sein, so wird das Wasser der Wärmeaustauschkammer bis zu seinem kritischen Punkt von ca. 220 bar und 374 °C unter starker Druckerhöhung flüssig bleiben. Ab diesem Punkt geht das gesamte Wasser der Wärmeaustauschkammer in den dampfförmigen Zustand über. Eine derartige Drucksteigerung dürfte jedoch technisch schwer regelbar, zum anderen auch nicht gewollt sein, da dann der gesamte Wasserdampfinhalt der Wärmeaustauschkammer mit flüssigem kaltem Wasser ersetzt werden müsste. Erforderlich ist es jedoch, dass kontinuierlich oder diskontinuierlich kaltes Wasser der Wärmeaustauschkammer zu- und erwärmtes Wasser abfließt. Bis zu 240 °C lässt sich dies laut der DE 35 02 895 A1 realisieren, denn dann scheint der entsprechende Druck, den das Wassers in der Wärmeaustauschkammer annimmt, technisch vertretbar zu sein, wobei flüssiges Wasser entweder kontinuierlich oder diskontinuierlich der Wärmeaustauschkammer zugeführt und flüssiges Wasser abgeführt wird. Damit wird auch das System gemäß der DE 35 02 895 A1 kanalartig durchströmt, bei ständig gefüllter Wärmeaustauschkammer. Eine Ausnahme hinsichtlich Kanal-Kühlung bildet der Kühl-Vorschlag der zum ersten Mal in EP 0 033 901 A1 gemacht wurde, oder später auch in JP000S62130761A, JPS62130762A und WO2015117582A1. Durch das Wasser-Bespritzen der Rückseite der Formschalen über Spritz-Düsen kann in begrenzter Weise auf den thermischen Haushalt der Formschale Einfluss genommen werden. Diese Kühlung ist jedoch örtlich völlig ungenau und daher nur beschränkt anwendbar. Wird ein bestimmter Bereich einer vertikalen heißen Wand mit Wasser bespritzt, so wird das Kühlmittel immer nur zum Teil an der Wand verdampfen.
- Der größere Teil wird im flüssigen Aggregatzustand von diesem Bereich in Richtung Schwerkraft ablaufen. Das folgt allein aus den physikalischen Gesetzmäßigkeiten des Bespritzens heißer Wände mit Wasser. Daher werden Bereiche, die in Richtung ablaufenden Wassers gelegen sind, mit diesem in Berührung kommen und ebenfalls gekühlt werden.
- Eine örtlich scharfe Trennung ist weiterhin nicht möglich, da auf Grund des radialen Breitlaufens des durch die Düse aufgespritzten Wassers benachbarte Regionen ebenfalls benetzt werden.
- Weiterhin können einander angrenzende Bereiche nicht ohne gegenseitige Störung mit unterschiedlichen Kühlmethoden oder Kühlintensitäten gekühlt werden. Sollten einige Bereiche der Formschalen mit stofflich unterschiedlichen Kühlmitteln behandelt werden müssen, bspw. einige Bereiche mit kalter Druckluft und angrenzende Bereiche mit Spritzwasser, so ist ebenfalls mit einer starken Beeinträchtigung beider Kühlvarianten untereinander zu rechnen. Eine Drucklufteinwirkung in Form eines Freistrahls auf eine bestimmte Fläche der Formschale würde eine Spritzwasserkühlung eines benachbarten Bereiches in ihrem Auftrag auf die Formschalen und in ihrer Wirkung einschränken. Aus diesem Grund fehlt auch die vollständige Möglichkeit, in benachbarten Bereichen gegensätzliche Temperierungs-Arten durchzuführen. Heiz-und Kühlmethoden können in nebeneinander liegenden Bereichen nicht angewandt werden. Die gegenseitige Beeinflussung bzw. stoffliche und thermische Wechselwirkung wäre zu hoch.
- Liegen bspw. auf den äußeren Formschalen gewisse Bereiche vor, die extern beheizt werden müssen, so würde ablaufendes oder breitlaufendes Spritz-Wasser von Nachbarbereichen dieses Beheizen stark beeinträchtigen bzw. völlig unmöglich machen. Es fehlt die Möglichkeit, derartige Beeinflussung beim Temperieren zu unterbinden.

Daher kann eine örtlich unterschiedliche bzw. örtlich abgegrenzte Temperierung und Regelung der Temperatur der zu temperierenden Oberfläche bzw. Randschale mit der vorgeschlagenen Art gemäß der EP 0 033 901 A1 oder JP000S62130761A und WO2015117582A1 nicht erfolgen.

Derzeit unberücksichtigt ist die Gefahr kritischer Zustände für das flüssige Kühlfluid Wasser, die aus verschiedenen Mechanismen der Wärmeübertragung resultieren. Diese sind abhängig von der Temperatur der temperierten Wand. Daraus folgen eine sehr schnelle Instabilität der Temperaturregelung bei der konturnahen Kühlung von Formwerkzeugen. Das ist aber im Falle der konturnahen Kühlung besonders wichtig, da durch den geringen Abstand der Kühl-Geometrie zur Kavität teilweise mit starken und plötzlichen Wärmeströmen über die dünne, konturnahe Formwerkzeugwandung auf das Kühlsystem gerechnet werden muss. Dies kann besonders bei Gussteilen aus Magnesium oder Aluminium der Fall sein, wenn es von der eingegebenen Schmelze zu einem plötzlich auftretenden starken Wärmestrom kommt.

Im Falle von Wasser in einem offenen Kühlsystem kann es dadurch in kanalartig durchströmten Kühlgeometrien örtlich zu unkontrollierter Bildung von Dampf-WasserGemischen kommen. Die gewollte stabile Wärmeübertragung auf das Kühlfluid kann stark beeinträchtigt werden. Besonders aber im andern Fall, dem geschlossenen Kühlsystem mit Wasser als Kühlfluid, kann es zu kritischen Zuständen kommen. Hier muss bei örtlicher Überhitzung mit starkem Druckanstieg im Kühlsystem gerechnet werden, sollten nicht Puffer zur Ausdehnung vorhanden sein. Überhitzungen im geschlossenen Kühlsystem sind bis zum kritischen Punkt von Wasser und darüber hinaus möglich. Im Falle des Kühlfluids Öl kann es bei örtlichen Überhitzungen der Kühlwand zu Zersetzungen und daraus folgenden Ablagerungen von Crack-Produkten des Öls an der heißen Wandung kommen. Der ursprünglich gewollte Wärmeübergang ist dadurch nicht mehr möglich.

Zudem ist oft nicht klar, ob man sich in den offenbarten Lösungen zur konturnahen Kühlung auf eine offene oder geschlossene Kühlung bezieht. Es ist auffällig, dass im Stand der Technik Werkzeugtemperierungen offenbart sind, welche die Mechanismen der Wärmeübertragung nicht berücksichtigen. Es wurde offenbar nicht verstanden, dass es diese Mechanismen bei der Temperierung heißer Wände gibt. Die Mechanismen trennen unterschiedliche Gebiete der Wärmeübertragung ab, bzw. jeder Mechanismus gilt in einem bestimmten Bereich der Temperatur der Wand. Außerdem verschieben sich diese Bereiche, wenn bestimmte Variablen geändert werden, wie beispielsweise die Oberflächenbeschaffenheit der Wand und solche der Verfahrensweise der Kühlung. Eine solche Verfahrens-Variable ist auch der Druck des Systems. Ist das Kühlsystem geschlossen, also gegenüber dem der umgebenden Atmosphäre dicht, so kann das Kühlsystem leicht unter Druck geraten. Das würde passieren, wenn die Temperatur irgendwo im Kühlsystem, bspw. an einer konturnahen Wand, schnell steigt. Je nach aktuellem Systemdruck verschieben sich nun die Mechanismen der Wärmeübertragung und mit ihnen die Größe der übertragbaren Wärme pro Zeiteinheit bzw. die Kühlintensität.

Schliesslich ist ein Verfahren und eine Vorrichtung zur Temperierung von schalenförmigen Formwerkzeugen aus DE 10 2014 001 563 A1 bekannt.

Aufgabe der vorliegenden Erfindung ist es daher, ein Verfahren der flächenhaften konturnahen Temperatur-Regelung der Temperier-Oberfläche schalenförmiger Formwerkzeuge bei miteinander kommunizierenden Medien in polyederartigen Räumen vom Rückraum des Formwerkzeuges her, zu schaffen.

Die Erfindung wird mit den Merkmalen von Haupt- und neben geordneten Ansprüchen gelöst. Vorteilhaft wird mit der Erfindung erreicht, dass eine vom Ort frei wählbare, zeitlich individuelle Temperierung der schalenförmigen Formwerkzeuge in Form der Regelung der Temperatur von Teilbereichen der Temperier-Oberfläche ermöglicht wird. Weiterhin werden keine nahezu punktförmigen oder kleine kreisflächige Bereiche temperiert, sondern es erfolgt die flächig ausgedehnte, konturnahe Temperierung der Temperier-Oberfläche über die Regelung der Temperatur der Teilbereiche, die der Gravur weitestgehend folgt. Es erfolgt keine Temperierung nach dem klassischen Verfahren in Kanälen, egal welcher geometrischen Form. Das Temperieren wird durch die Möglichkeit der Anwendung verschiedener Temperiermedien in einem offenen Kühlsystem, das heißt zur Atmosphäre hin druckoffen, ermöglicht. Weiterhin lässt sich das thermische Wechselwirken der Temperier-Medien mit der Temperier-Oberfläche an beliebigen Stellen der Temperier-Oberfläche zu beliebigen Zeiten unterbrechen und wieder fortsetzen. Durch ein gezielt geregeltes Ein- und Ausschalten des Temperiermediums Wasser wird unter Ausnutzung verschiedener Mechanismen der Wärmeübertragung die Regelung der Temperatur oder einer Temperaturverteilung eines jeden Teilbereichs der Temperier- Oberfläche der Formwerkzeug-Randschale ermöglicht. So sind nachfolgend wechselnde Kühl- und Heiz-Behandlungen im selben Teilbereich möglich. Durch die wird die Planbarkeit des Gießvorganges verbessert. Es wird möglichst frühzeitig auf die Schonung des Werkzeuges Einfluss genommen. Es wird ermöglicht, das Werkstück bzw. den Formling entsprechend technologischer Zielvorgaben des Prozesses gezielt in seinen mechanischen Eigenschaften zu beeinflussen, wie beispielsweise durch Einflussnahme auf Porosität und Feinkörnigkeit, besonders in sensiblen Bereichen des Werkstückes. Es ist möglich, bereits während der Planung des Prozesses gezielt auf die exakte Formfüllung Einfluss zu nehmen. Mit dem beschriebenen Verfahren wird der Entstehung von Fehlerbildern des Werkstückes, wie Kaltlauf, Schlieren u.ä., die die Folge kalter Bereiche der Gravur sind, wirkungsvoll entgegengewirkt. Durch das Verfahren sind weitreichende Erweiterungsmöglichkeiten der Anwendung des Druckgießens dünner Wände möglich. Durch die verbesserte Temperierung des Formwerkzeuges wird die Minimierung von thermisch-mechanischen Spannungen und die Verhinderung frühzeitiger Rissbildungen auf der Gravur des Werkzeuges möglich. Durch deren Verhinderung lässt sich die mechanische Stabilität der Gieß-Werkzeuge gewährleisten. Für den Auftrag von Trennmittel auf die Gravur ist kein Verdüsen von Wasser-Trennmittelgemischen mit dem Träger Luft mehr nötig. Es wird nur noch Trennmittel allein auf die Gravur aufgetragen. Der Einsatz von Trennmittel und von Druckluft wird dadurch minimiert. Der im Vergleich zur klassischen Kühlung über das Besprühen der Gravur mit Trennmittel-Wassergemischen erfolgende Anfall von Abwasser bzw. dessen Aufbereitung fällt weg. Je nach technologischen Erfordernissen, ist mit dem Verfahren nur der Einsatz einer optimalen Menge an Kühlmedium nötig. Es ist nur so viel Kühlmedium erforderlich, wie gezielt für die Regelung der Temperatur des jeweiligen Teilbereichs vom Rückraum des Werkzeuges her nötig ist. Die beim Formprozess anfallende Prozessenergie wird zum größten Teil über den Rückraum des schalenförmigen Formwerkzeuges abgeführt und nicht mehr wie klassisch durch Besprühen der Gravur mit Trennmittel-Wassergemisch. Infolge des Verfahrens verkürzt sich die Prozesszeit erheblich. Weiterhin lassen sich die bisher besonders im Druckguss üblichen geschmiedeten Stähle für den Formwerkzeugbau weiter verwenden. Im Wesentlichen lassen sich für die Herstellung der erfindungsgemäßen Temperier-Oberfläche vom Rückraum des Formwerkzeuges her die üblichen bzw. klassischen Bearbeitungs-Werkzeuge des Formwerkzeugbaus verwenden. Die Temperier-Oberflächen der schalenförmigen Formwerkzeuge, über welche die Temperierung erfolgt, lassen sich im Verfahren zur optimalen Anwendung der Kühlung in den Teilbereichen in geeigneter Weise konditionieren. Auch die Temperier-Medien lassen sich konditionieren, um das erfindungsgemäße Temperierungs-Verfahren optimal zu gestalten. Ein Umarbeiten von bestehenden bzw. in Gebrauch befindlichen Formwerkzeugen auf das erfindungsgemäße Verfahren ist möglich, sofern es die jeweiligen geometrischen Voraussetzungen des Rückraums dieses bestehenden Formwerkzeuges erlauben.

Bei der Beregnung einer heißen Wand mit Wasser gibt es verschiedene Mechanismen der Wärmeübertragung. Diese Mechanismen sind die Konvektion an der Wand, welche in die Blasenverdampfung übergeht, welche wiederum an der Burnout-Temperatur in die Filmverdampfung übergeht. Die Filmverdampfung unterteilt sich in die partielle und die stabile Filmverdampfung. Die Grenze zwischen der partiellen und der stabilen Filmverdampfung ist der Leidenfrostpunkt mit der Leidenfrosttemperatur. Im erfindungsgemäßen Verfahren kommen diese genannten Mechanismen kontrolliert zum Einsatz. Das heißt, es kann zu jeder Zeit und an jedem Ort der Temperier-Oberfläche kontrolliert Wärme übertragen werden. Entsprechend der vorliegenden Erfindung wird die Temperatur der Teilbereiche der Temperier-Oberfläche nach den Mechanismen der Wärmeübertragung von flüssigem Wasser an eine heiße Wand, wie Konvektion, Blasenverdampfung und dem der partiellen und/oder stabilen Filmverdampfung geregelt. Die Teilbereiche der Temperier-Oberfläche können in ihrer Temperatur bzw. TemperaturVerteilung verschieden geregelt werden. Dabei soll das Kühlsystem zur Atmosphäre hin offen, d.h. druckoffen und ein Druckausgleich mit dieser immer gegeben sein. Die Leidenfrost-Temperatur bzw. der Leidenfrost-Punkt der Wandoberfläche spielt eine wichtige Rolle, was seit langem bekannt ist. Am Leidenfrost-Punkt ändert sich der Mechanismus der Wärmeübertragung vom Wasser an die heiße Wand. Die Temperatur der heißen Wandoberfläche bestimmt den Mechanismus der Wärmeübertragung. Nach diesem Mechanismus wird die Größe des Wärmeübertragungskoeffizienten bestimmt. Er ist ein Maß für die Intensität der Wärmeübertragung. Bei hohem Koeffizienten kommt es zu starker Wärmeübertragung. Sinkt er, kommt es zu entsprechend niedrigerer Wärmeübertragung. Bei höheren Temperaturen als der Leidenfrost-Temperatur erfolgt die Wärmeübertragung nach dem Mechanismus der stabilen Filmverdampfung. Hier entsteht beim ersten Kontakt des Wassers mit der Oberfläche ein sehr dünner Dampffilm auf dieser Oberfläche, der den weiteren direkten Kontakt des flüssigen Kühlfluids Wasser mit dieser heißen Oberfläche verhindert. Der Dampffilm wirkt Wärme isolierend. Er bewirkt, dass oberhalb der Leidenfrost-Temperatur die Abhängigkeit des Wärmeübertragungskoeffizienten von der Wandtemperatur nur schwach ist. Sinkt die Oberflächentemperatur der Wand auf den Leidenfrost-Punkt, dann kommt es zu einer Änderung des Mechanismus der Wärmeübertragung. Der isolierende Dampffilm beginnt zu zerbrechen und ein direkter Kontakt des flüssigen Wassers mit der heißen Oberfläche ist zum Teil möglich. Am Leidenfrost-Punkt beginnt daher das Gebiet der partiellen bzw. teilweisen Filmverdampfung. Je mehr die Temperatur der Wand absinkt, desto besser wird der Kontakt des flüssigen Wassers mit der heißen Oberfläche und desto geringer werden die Gebiete des isolierenden Dampffilmes auf dieser. Um so größer wird auch das Potential zur Wärmeübertragung bzw. die Intensität. Der Wärmeübertragungskoeffizient wächst an. Der Bereich der partiellen Filmverdampfung endet am Burnout-Punkt mit der maximal möglichen Wärmeübertragung. Dieser ist ähnlich wie der Leidenfrost-Punkt von vielen Einflussgrößen abhängig. Unterhalb der Temperatur dieses Burnout-Punktes beginnt das Gebiet der Blasenverdampfung des Wassers an der heißen Wand. Bei hohen Temperaturen entstehen an Unebenheiten der Wand viele Blasen. Dieses Potential zur Blasenbildung nimmt mit sinkender Temperatur ab.

Einhergehend sinkt der Wärmeübertragungskoeffizient bzw. die Intensität der Wärmeübertragung auf die Wand. Bei niedriger Temperatur verschwindet die Blasenbildung an der Wand und es beginnt das Gebiet der Konvektion, dass heißt die Wärmeübertragung durch bloßes Strömen des flüssigen Wassers an die Wand. Diese Konvektion kann frei, also ohne aufgezwungene äußere Kraft oder durch eine aufgezwungene äußere Kraft der Strömung des Fluides an die Wand erfolgen. Das sind die Mechanismen der Wärmeübertragung von flüssigem Wasser an die heiße Wand, denen bestimmte Bereiche der Wand-Temperatur zugeordnet sind. In allen Bereichen sind die Wärmeübergänge von der Wand auf das flüssige Wasser unterschiedlich.

Der Leidenfrost-Punkt ist von vielen Größen abhängig: Beregnungsdichte bzw. Wasserbeaufschlagungsdichte, Anströmgeschwindigkeit und Anströmart des Wassers, Oberflächenmaterial der Wand, Zusammensetzung des Wassers, Systemdruck, Ablagerungen auf der Wand, chemische Veränderungen der Wandoberfläche, Struktur der Wandoberfläche u.a.

Unter kontrollierter Ausnutzung der Mechanismen der Wärmeübertragung an einer heißen Wand, kann entsprechend der vorliegenden Erfindung das Formwerkzeug über verschiedene Teilbereiche der Temperier-Oberfläche geregelt temperiert werden. In den Teilbereichen wird auf Soll-Temperatur oder eine Soll-Temperaturverteilung geregelt.

Die Temperier-Oberfläche der schalenförmigen Formwerkzeuge ist dazu in Teilbereiche mit unregelmäßigen, vieleckigen Grundrissen unterteilt, welche durch wandartige Trenn-Passier-Elemente begrenzt sind, die mit der Temperier-Oberfläche verbunden oder mit dieser ausgearbeitet sind. Durch die Trenn-Passier-Elemente wird ein seitlich begrenzter Teilbereich mit unregelmäßigem, vieleckigem Grundriss so verstanden, dass dessen innerer Raum durch mechanische oder thermische o.a. Verfahren der Materialbearbeitung ausgearbeitet ist oder die seitlichen Begrenzungen durch nachträgliche Schritte der Materialbearbeitung eingearbeitet oder aufgebracht werden. Dabei weist ein solcher Grundriss mindestens drei Grundseiten auf der Temperier-Oberfläche auf. Hierbei bilden die Temperier-Oberfläche sowie die durch die Trenn-Passier-Elemente begrenzten Teilbereiche einen polyederartigen Raum, wobei dessen Begrenzungsflächen die Trenn-Passier-Elemente und die Grundfläche auf der Temperier-Oberfläche sind und der polyederartige Raum auf der der Temperier-Oberfläche gegenüberliegenden Seite offen ist oder zumindest teilweise durch Gehäuseteile begrenzt wird. Diese polyederartigen Räume besitzen durch unterschiedlich hohe Trenn-Passier-Elemente unterschiedliche Tiefen. Die der Temperier-Oberfläche abgewandten Stirnflächen der Trenn-Passier-Elemente liegen auf unterschiedlichen Ebenen.

Es bleibt allein die äußere, seitliche, wandartige Begrenzung des jeweiligen polyederartigen Raumes stehen. Diese äußeren wandartigen Begrenzungen werden im Folgenden Trenn-Passier-Elemente genannt. Ein polyederartiger Raum wird demnach von Trenn-Passier-Elementen begrenzt. Diese sitzen auf der Temperier-Oberfläche mit ihren der Temperier-Oberfläche zugewandten Stirnflächen auf. Als Aufsitzen der wandartigen Trenn-Passier-Elemente, wird verstanden, dass die Trenn-Passier-Elemente über mechanische Verfahren, wie Fräsen, Erodieren o.a. von der Rückseite der Form her so eingearbeitet werden, so dass diese eine stoffschlüssige Verbindung - d.h. ohne Unterbrechung des Stoff-Flusses der Formwerkzeug-Randschale - nichtlösbare Verbindung mit der Formoberfläche darstellen. Es ist aber auch möglich, die Formwerkzeug-Randschale von der Rückseite des Formwerkzeuges her in Gänze mit Verfahren wie Fräsen und erodieren o.a. konturnah auszuarbeiten und die Trenn-Passier-Elemente im Nachgang über Schweißen, Löten, Schrauben, 3 D-Verfahren, wie selektives Laserschmelzen o.a. auf die Temperier-Oberfläche aufzubringen. Sollte es gewollt sein, dass das flüssige Temperiermedium Wasser nicht über die der Temperier-Oberfläche zugewandten Stirnflächen der Trenn-Passier-Elemente zur Temperier-Oberfläche in den benachbarten polyederartiger Raum läuft, so müssen die ausgearbeiteten oder aufgebrachten Trenn-Passier-Elemente wasserdicht gegen Verlaufen flüssigen Wassers auf die Temperier-Oberfläche aufgebracht sein.

In beiden Fällen entsteht dadurch die Formwerkzeug-Randschale mit der rückseitigen Temperier-Oberfläche, auf der Trenn-Passier-Elemente aufsitzen, die polyederartige Räume darstellen. Die so freigestellte Rückseite des Formwerkzeuges wird als Rückraum oder Temperierraum bezeichnet. In ihm befinden sich die polyederartigen Räume, die über ihre Trenn-Passier-Elemente auf der Temperier-Oberfläche aufgebracht oder eingearbeitet sind und die einzeln oder als Gruppe Teilbereiche der Temperier-Oberfläche darstellen.

Das ist als fundamental für das vorliegende Verfahren anzusehen: Die Übertragung von Wärme ist nur kontrolliert regelbar, wenn es Trenn-Passier-Elemente für die Teilbereiche auf der Temperier-Oberfläche gibt. Würde das nicht so sein, so würde beim Beregnen eines Ortes der Temperier-Oberfläche völlig unkontrolliert das flüssige Wasser breit und zudem herunter in andere Bereiche der Temperier-Oberfläche laufen. Es sollen aber gezielt bestimmte gewollte Teilbereiche der Temperier-Oberfläche gleichmäßig beregnet bzw. mit einem Film benetzt werden. Eine gezielte Regelung des Bedarfs an Kühlintensität bzw. der Abfuhr von Wärme ist nur so möglich. Prinzipiell wird nahezu immer flüssiges Wasser vom Ort der Beregnung weg laufen, zumal die Temperier-Oberflächen in den meisten Fällen senkrecht stehen. Zum einen wird mit einer gewissen Intensität beregnet, um überhaupt eine Kühlwirkung zu erreichen. Andererseits ist es gewollt, dass Wasser direkt am Ort des Auftreffens verdampfen soll, so könnte nur tröpfchenweise nacheinander Wasser aufgebracht werden. Dazu müsste der Tropfen auf eine ebene waagerechte Temperieroberfläche auftreffen, von der kein Abrollen stattfinden kann. Wenn die Verdampfung im Bereich der stabilen Filmverdampfung stattfinden sollte, dann würde sich der Tropfen auf jeden Fall instabil auf der heißen Oberfläche bewegen, denn ein Dampfpolster würde sich unter ihm befinden. Und selbst wenn man sich im Bereich der stabilen Filmverdampfung befinden würde, dann würde die Verdampfung nicht augenblicklich erfolgen. Die Wand wird nämlich an der Stelle des Auftreffens etwas kälter was vom Innern her durch Wärmezufuhr an die Oberfläche ausgeglichen wird. Es ist also von den Mechanismen der Wärmeübertragung gar nicht möglich, dass das Wasser beim Besprühen des Ortes der heißen Wand an ein und demselben Ort bleibt. Sind keine Trenn-Passier-Wände eingeführt, dann muss das Wasser unkontrolliert breit laufen. Der physikalische Mechanismus des Wärmeaustausches beim Auftreffen flüssigen Wassers auf eine heiße Wand erlaubt es nicht anders. Daher kann die nach JP000S62130761A und EP0033901 A1 vorgestellte Lösung des einfachen Bespritzens von heißen Formwänden nicht zu einer regelbaren und kontrollierbaren Übertragung von Wärme an einem gewünschten begrenzten Zielort führen. Es werden immer Nachbarorte durch Breit- und Herunterlaufen von Wasser aus dem Sprühbereich unkontrolliert in ihrer Temperatur beeinträchtigt. In den Bereichen Blasenverdampfung, partiellen und stabilen Filmverdampfung entsteht in jedem Fall Dampf und ablaufendes Wasser aus dem Aufspritzbereich.

Die polyederartigen Räume bzw. deren Trenn-Passier-Elemente können vielgestaltig sein. Das hängt von den Gegebenheiten bzw. Anforderungen der Temperierung ab.

Dabei stellt die Grundfläche auf der Temperier-Oberfläche der polyederartigen Räume, die von Trenn-Passier-Elementen begrenzt werden, die jeweiligen Teilbereiche auf der Temperier-Oberfläche dar. Ein Trenn-Passier-Element muss aber nicht gleichbedeutend mit einer Grenze eines Teilbereichs sein. So können auch mehrere polyederartige Räume zu einem Teilbereich gehören. Ein Teilbereich dient zur Abgrenzung einer Temperier-Aufgabe auf einem bestimmten Bereich der Temperier-Oberfläche. In ihm wird eine vorgegebene Soll-Temperatur oder eine Temperaturverteilung geregelt. In diesem können zusätzliche Trenn-Passier-Elemente aufgebracht bzw. eingearbeitet werden. Andere Forderungen für das Aufbringen von Trenn-Passier-Elementen sind beispielsweise die zielgerichtete Leitung von Strömungen des Temperier-Mediums. So ist es oft angebracht, die Trenn-Passier-Elemente so zu gestalten, dass eine Temperierung mit Temperiermedien auf der Temperier-Oberfläche überhaupt erst möglich wird. Das bedeutet, dass die Trenn-Passier-Elemente oft nicht ebene Gestalt haben, sondern eher gewölbt ausgelegt und zusätzlich auf der Temperier-Oberfläche angeordnet werden müssen.

Weitere Forderungen für das Aufbringen von Trenn-Passier-Elementen ist die mechanische Stabilität des Werkzeuges bzw. der Formwerkzeug-Randschale. Dafür sind oft zusätzliche Trenn-Passier-Elemente notwendig. Einzelne polyederartige Räume auf der Temperier-Oberfläche können daher für sich Teilbereiche der Temperier-Oberfläche darstellen. Aber auch mehrere polyederartige Räume können einen Teilbereich der Temperier-Oberfläche darstellen.

Die Teilbereiche der Temperier-Oberfläche stellen flächig ausgedehnte Bereiche der Temperier-Oberfläche dar, deren Größe und Geometrie sowie Anzahl der Trenn-Passier-Elemente stark wechseln . Die Anzahl der polyederartigen Räume muss nicht gleich der Anzahl der Teilbereiche sein.

Durch diese Unterteilung der gesamten Temperier-Oberfläche mit Trenn-Passier-Elementen wird deren vollständige Benetzung bzw. Anströmung mit Temperier-Medien und dadurch die Regelung der Temperatur einzelner Teilbereiche erst ermöglicht. Durch die geeignete Wahl von Anzahl und Aussehen der Trenn-Passier-Elementen wird ein geeigneter Wärmeübergang in den einzelnen Teilbereichen erst möglich. Sie ist Voraussetzung für das optimale Funktionieren des erfindungsgemäßen Verfahrens. Diese Unterteilung ist von den gegebenen Anforderungen der Temperierung der Temperier-Oberfläche und speziell von den Anforderungen an die Temperierung des bzw. die Wärmeübertragung vom zu formenden Werkstückes abhängig.

Weiterhin ist diese Unterteilung abhängig von der Stabilität der Formwerkzeug-Randschale, die den mechanischen Sicherheitsanforderungen an das Werkzeug genügen muss. Die Trenn-Passier- Elemente stellen somit die mechanische Stabilität der Formwerkzeug-Randschale sicher. Die beim Gießprozess auftretenden Kräfte des Formprozesses werden über die Trenn-Passier-Elemente bzw. polyederartigen Räume an den Massivbereich des Formwerkzeuges weiter gegeben.

Jeder polyederartige Raum hat weiterhin einen offenen Zugang zur Atmosphäre. Das bedeutet, dass diese Teilbereiche druckoffen zur Atmosphäre sind bzw. nahezu gleichen Druck zur Atmosphäre haben. Anders ausgedrückt heißt das, dass der Druck der Temperier-Fluide, die zur Temperierung der Teilbereiche der Temperier-Oberfläche eingesetzt werden, gleich bzw. nahezu gleich dem Druck der umgebenden Atmosphäre ist. Der Druck im Temperier-Raum übersteigt den herrschenden äußeren Umgebungsdruck nicht bzw. ist diesem nahezu gleich. Das ist im Allgemeinen der normale Luftdruck von 1 bar. Das ganze System der Temperierung ist offen zur umgebenden Atmosphäre. Das Verfahren wird nicht bei höherem Druck als dem der normalen Atmosphäre betrieben. Beim Kühlen der Temperier-Oberfläche mit flüssigem Wasser ist unter Normalbedingungen die maximale Temperatur flüssigen Wassers an der heißen Temperier-Oberfläche ca. 100 °C. Bei dieser Temperatur geht flüssiges Wasser unter normalem Umgebungsdruck in Dampf über.

Die Trenn-Passier-Elemente können in ihrer Art flächige oder anders geartete Gebilde sein, über die eine teilweise gegenseitige Beeinflussung der fluiden Temperier-Medien zwischen den einzelnen polyederartigen Räumen auf der Temperier-Oberfläche ermöglicht wird. Dadurch besteht die Möglichkeit, dass fluide Temperier-Medien des einen polyederartigen Raumes in einen benachbarten polyederartigen Raum teilweise passieren und sich in den entsprechenden polyederartigen Räumen teilweise mischen bzw. miteinander stofflich wechselwirken. Die Medien von verschiedenen polyederartigen Räumen können daher miteinander kommunizieren. Da die polyederartigen Räume weiterhin Verbindung zur umgebenden Atmosphäre haben, was meist Luft sein wird, kann auch Luft Zutritt zu den polyederartigen Räumen haben. Die Kommunikation von Medien benachbarter polyederartiger Räume kann dadurch erreicht werden, dass die Trenn-Passier-Elemente zwischen den polyederartigen Räumen Unterbrechungen aufweisen und dadurch eine Mischung beider Fluide erlauben. Dabei müssen die Trenn-Passier-Elemente weder an der unteren Stirnseite vollständig auf der Temperier-Oberfläche aufsitzen. Andererseits können Trenn-Passier-Elemente auf der Temperier-Oberfläche vollständig aufsitzen, aber eine derartige Höhe aufweisen, dass ein teilweises Mischen von Fluiden benachbarter polyederartiger Räume oder sogar weiter entfernte polyederartige Räume der Temperier-Oberfläche möglich ist. Weiterhin können Trenn-Passier-Elemente benachbarter polyederartiger Räume anderweitig Durchbrüche aufweisen, um einen teilweisen Austausch von Fluiden benachbarter Polyeder-Räume zu ermöglichen. Es kann aber von vornherein gewollt sein, dass mehrere wandartige Trenn- und Passier-Elemente von ein und demselben Temperier-Fluid gleichzeitig überströmt bzw. überregnet werden. Das kann von außen durch Zugabe des Fluides zu Temperierzwecken oder zum Zwecke der Strömungsführung des Fluides geschehen. Mit der Fluid-Kommunikation zwischen polyederartigen Räumen besteht dadurch die Möglichkeit, dass Fluide auch in geometrisch schwer zugängliche Gebiete des jeweiligen Teilbereiches der Temperier-Oberfläche bzw. der Stirnflächen der jeweiligen polyederartigen Räume gelangen können. Das ist wichtig, da es durch die stark wechselhafte Geometrie der konturnahen Temperier-Oberfläche in den Teilbereiche immer Ecken und Kanten geben wird, die ohne die Möglichkeit der angepassten Fluid-Strömungsführung, d.h. eine gezielte Leitung der Strömung, schwer zu erreichen sind. Im Falle flüssigen Wassers ist wichtig, dass ein flüssiger Film auf der Temperier-Oberfläche bzw. auf einem Teilbereich dieser verteilt wird, um zu jeder Zeit kontrolliert und geregelt Wärme zu übertragen, entsprechend der Mechanismen der Wärmeübertragung Konvektion, Blasenverdampfung und der partiellen und stabilen Filmverdampfung. Im Fall der stabilen Filmverdampfung bildet sich beim Beregnen mit Wasser eine dünne Dampfschicht zwischen heißer Oberfläche und dem flüssigen Wasser. Sollte ein solcher flüssiger Film nicht auf dem jeweiligen Teilbereich der Temperier-Oberfläche sein, so ist die geregelte Wärmeübertragung nicht möglich.

Die wandartigen Trenn-Passier-Elemente müssen nicht von ebener Gestalt sein. Das heißt, sie müssen nicht als klassische geometrische Ebene mit dem jeweiligen Bearbeitungsverfahren in die Temperieroberfläche eingearbeitet, wie bspw. Fräsen o.ä, oder auf diese aufgebracht werden, wie bspw. Schweißen o.ä., sondern können von beliebiger Gestalt sein, bspw. auch wellig oder ausgewölbt. Das kann aufgrund der technologischen Erfordernisse der Temperierung oder anderer Erfordernisse der Formwerkzeug-Randschale notwendig sein. Durch die geeignete geometrische Auslegung der Trenn-Passier-Elemente besteht jedoch die Möglichkeit, in benachbarten Teilbereichen der Temperier-Oberfläche unterschiedliche Temperierungen durchzuführen, und die Wechselwirkung der Medien über die Trenn-Passier-Elemente der polyederartigen Räume gering zu gestalten. Die Trenn-Passier-Elemente tragen weiterhin zur mechanischen Stabilität der Formwerkzeug-Randschalen bei. Dabei werden sie neben ihrer Eigenschaft der Trennung und des Passieren-Lassens von Fluiden auch hinsichtlich der Stabilität der Formwerkzeug-Randschalen entsprechend ausgelegt.

Mehrere Zeichnungen, in denen wesentliche Merkmale der Erfindung dargestellt sind, werden im Folgenden näher beschrieben. Es zeigen:
Fig. 1 eine Prinzipskizze zur Gestaltung eines flächenhaften, konturnahen, schalenförmigen Formwerkzeuges bei miteinander kommunizierenden Medien in polyederartigen Räumen als Schnittbild eines geschlossenen Formwerkzeuges mit zwei Formwerkzeughälften, jeweils mit den Formwerkzeug-Randschalen,
Fig. 2 eine Prinzipskizze zur Gestaltung eines flächenhaften, konturnahen, schalenförmigen Formwerkzeuges bei miteinander kommunizierenden Medien in polyederartigen Räumen als Schnittbild eines geschlossenen Formwerkzeuges mit zwei Formwerkzeughälften, jeweils mit Teilbereichen der Temperier-Oberflächen auf den Formwerkzeug-Randschalen,
Fig. 3 eine Draufsicht auf die Temperier-Oberfläche einer Formwerkzeug-Randschale mit Teilbereichen und Trenn-Passier-Elementen,
Fig. 4 eine Schema einer möglichen Regelung der Temperatur eines Teilbereiches der Temperier-Oberfläche,
Fig. 5 ein Schema einer diskontinuierlichen Zuschaltung des Beregnungs-Volumenstromes in Balkendarstellung,
Fig. 6 ein Schema der kontinuierlichen Beheizung eines Teilbereiches der Temperier-Oberfläche in Balkendarstellung,
Fig. 7a prinzipieller Verlauf des Wärmeübergangskoeffizient α als Funktion der Wandtemperatur ϑₒ der Temperier-Oberfläche beim Beregnen mit Wasser,

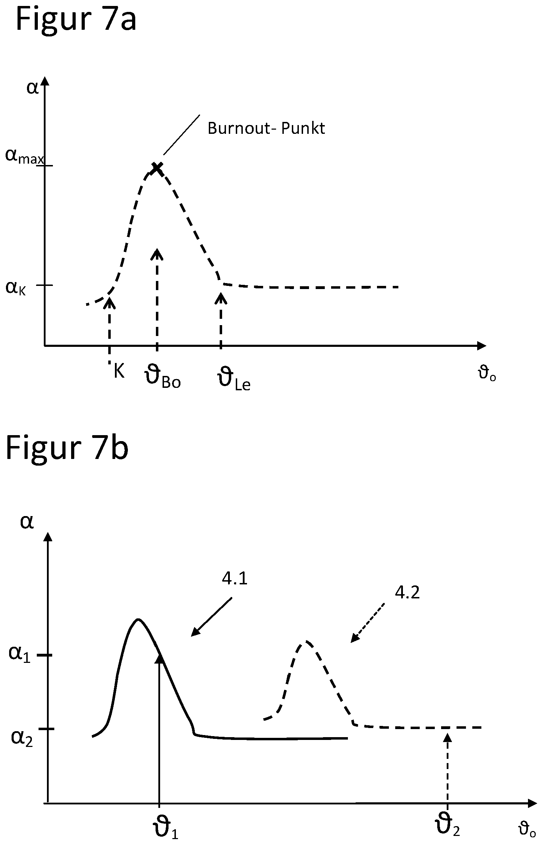

Fig. 7a zwei ausgewählte zu regelnde Soll-Temperaturen auf der Temperier-Oberfläche mit der entsprechenden zu übertragenden Wärme bzw. Kühlintensität,

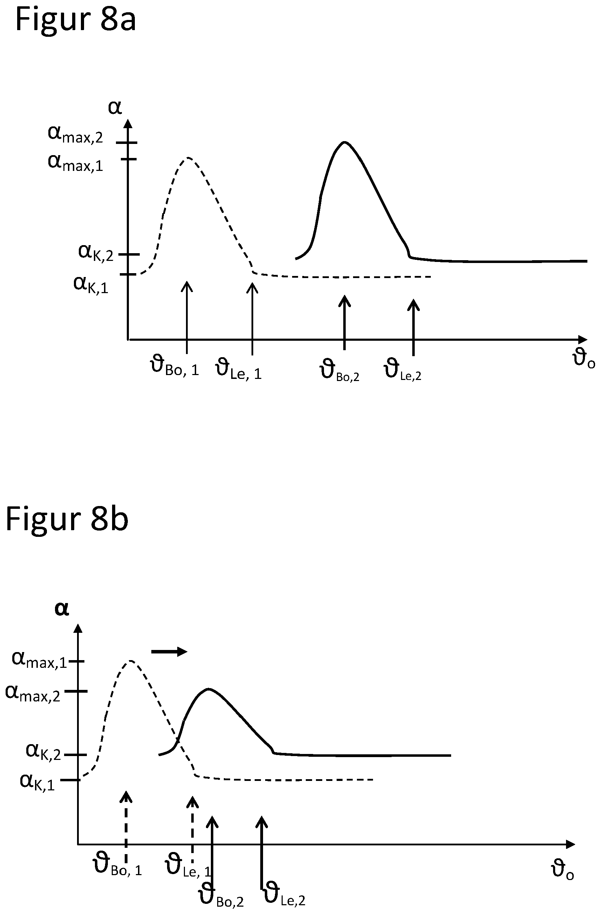

Fig. 8a Verschiebung der Gebiete der Wärmeübertragung bei Veränderung des OberflächenMaterials der Temperier-Oberfläche durch eine gewollte chemische Veränderung oder physikalische Beschichtung,
Fig. 8b Verschiebung der Gebiete der Wärmeübertragung bei Veränderung des OberflächenMaterials der Temperier-Oberfläche durch eine ungewollte chemische und/oder mikromechanische Veränderung der Oberfläche des Wandmaterials,

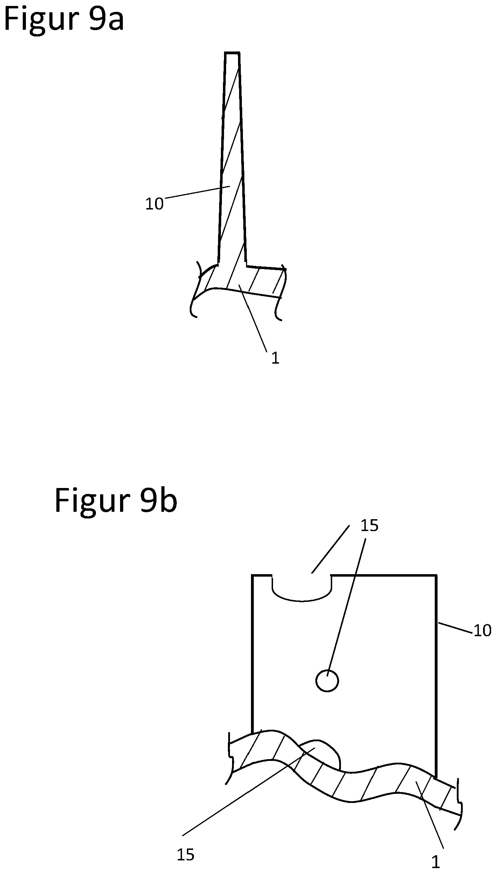

Fig. 9a Schnittdarstellung eines Trenn-Passier-Elemente, eingearbeitet in eine Formschale,
Fig. 9b Seitenansicht der Fig. 9a eines Trenn-Passier-Elementes, eingearbeitet in eine Formschale,

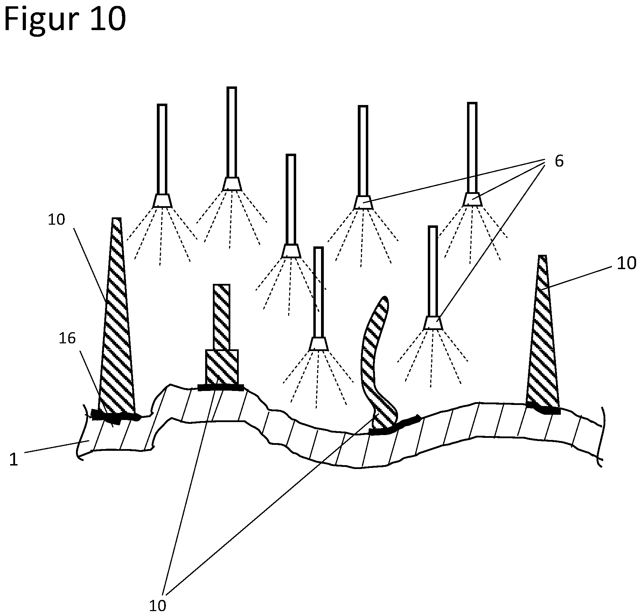

Fig. 10 Querschnitt durch die Formschale mit auf die Formschale aufgebrachten Trenn-Passier-Elementen und Beregnungsdüsen,

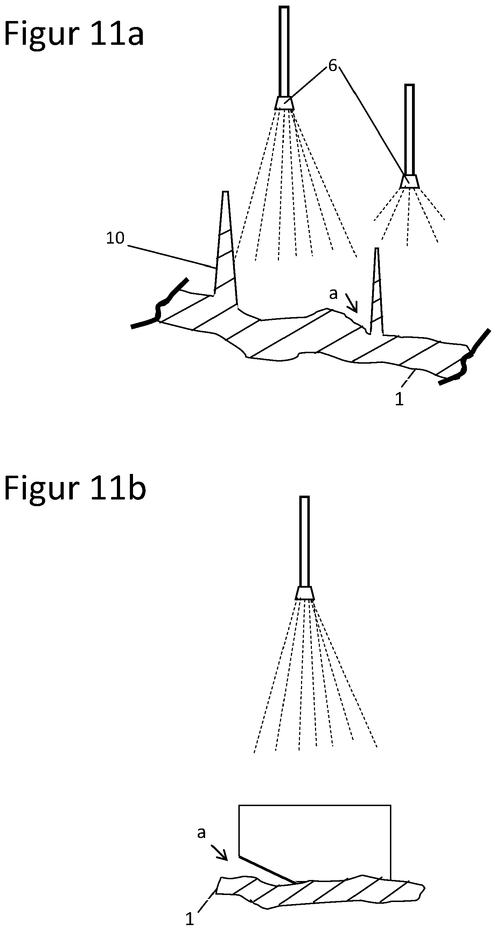

Fig. 11a die Beregnung mittels Beregnungs-Düse eines schwierig überströmbaren Gebietes auf einem Teilbereich der Temperier-Oberfläche,
Fig. 11b die Seitenansicht zu Fig. 11a,

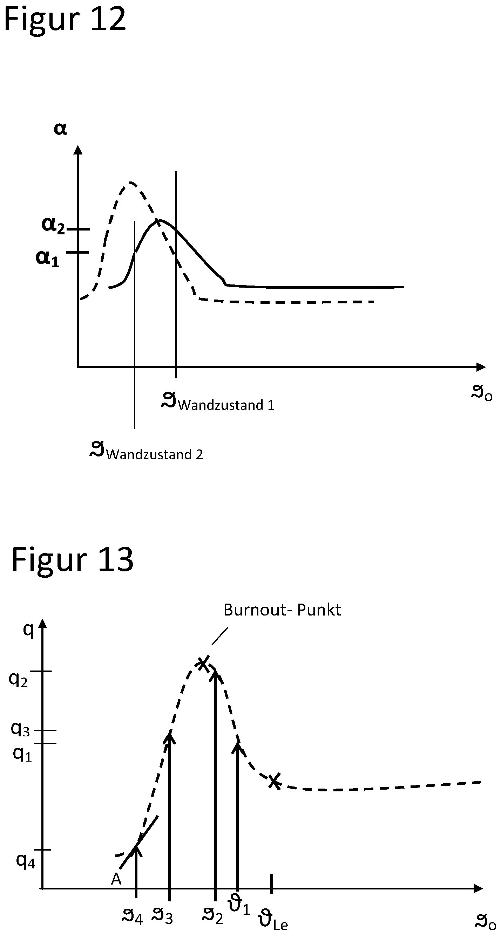

Fig. 12 Darstellung der Veränderung der Wärmeübertragung der Temperier-Oberfläche durch deren Alterung und der damit verbundenen Änderung der Regelung der Soll-Temperatur der Temperier-Oberfläche und
Fig. 13 eine Orientierungsmöglichkeit eines Reglers in den Bereichen der Wärmeübertragung. Erfindungsgemäß werden mit dem neuen Verfahren rückseitige Oberflächen von schalenförmigen Formwerkzeugen 14 mit Formwerkzeug-Randschalen 1 temperiert. Diese rückseitigen Oberflächen werden Temperier-Oberflächen 4 genannt. Dabei wird die Temperier-Oberfläche 4 in verschiedene Teilbereiche 4.i eingeteilt. Dabei kann das Formwerkzeug 14 zwei- und mehrteilig sein und dadurch mehrere Formwerkzeug-Randschalen 1 aufweisen, die nach dem vorliegenden Verfahren temperiert werden. Die jeweilige Temperier-Oberfläche 4 der Formwerkzeug-Randschale 1 kann dabei so gestaltet sein, dass sie der Gravur 5 der Kavität 2 des Formwerkzeuges 14 folgt.

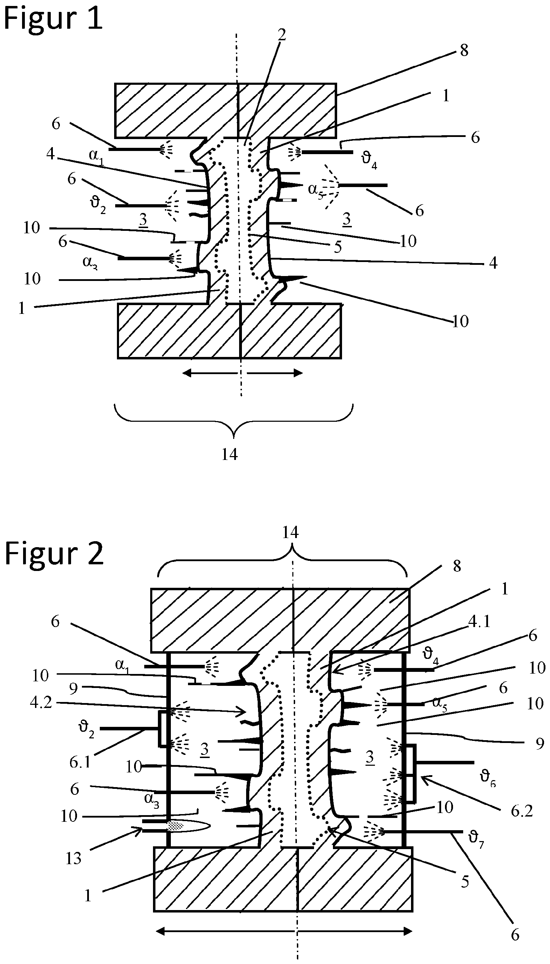

Die Temperier-Oberfläche 4 kann gekühlt oder beheizt werden. Die Temperierung kann prinzipiell durch verschiedene Medien in Teilbereichen 4.i und ihren polyederartigen Räumen im Rückraum 3 des Formwerkzeuges erfolgen. In den Figuren 1 und 2 ist das schematisch in einem Schnittbild durch das Formwerkzeug 14 dargestellt. Die Temperier-Medien in den polyederartigen Räumen können miteinander über Trenn-Passier-Elemente 10 kommunizieren. Je nach Erfordernissen der Temperierung und Strömungsführung werden die einzelnen Trenn-Passier-Elemente 10 in die Tempertier-Oberfläche 4 eingearbeitet oder aufgebracht. Durch diese Möglichkeit kann die optimale Temperierung der gesamten Temperier-Oberfläche erreicht werden. In den Figuren 9, 10 und 11 sind Beispiele solcher Trenn-Passier-Elemente dargestellt. Es sind wandartige Gebilde, die je nach Erfordernis eben oder wellig sind. Sie sind beispielsweise auch in einem Teil kalottenförmig oder haben Durchbrüche 15. Damitsind sie in ihrer Gestalt so angepasst, dass sie den Erfordernissen der Wechselwirkung der Temperiermedien in benachbarten polyederartigen Räumen gerecht werden. Zudem besitzen die Trenn-Passier-Elemente 10 einen diskontinuierlichen Querschnittsverlauf, so dass einerseits das Verteilen und Ablaufen des Wassers zuverlässiger erfolgt und anderseits die Stabilität verbessert wird. Schematische Darstellungen dafür sind in den Figuren 1, 2, 9, 10 und 11a beispielhaft dargestellt. Wird beispielsweise ein Teilbereich 4.i der Temperier-Oberfläche 4 mit flüssigen Wasser überströmt, so ist zu gewährleisten, dass der gesamte Teilbereich 4.i von einem Wasserfilm benetzt wird, der durch die Beregnung mit dem Kühlmedium Wasser immer wieder erneuert wird, um die Wärmeübertragung stets reproduzierbar in diesem Teilbereich 4.i zu gestalten. Dazu muss das Wasser auch in Ecken und Kanten auf der Temperier-Oberfläche 4 des jeweiligen Teilbereiches gelangen. Aufgrund der stark wechselnden Topographie einer konturnahen Oberfläche ist dies mit Wänden, die einer Ebene gleichen, oft schwierig zu realisieren. Daher sind die jeweiligen wandartigen Trenn-Passier-Elemente 10 in ihrer Form so anzupassen, dass ein geeignetes Überströmen des gesamten Teilbereiches 4.i mit Wasser erfolgen kann. Ohne Wasserfilm kann das vorliegende Verfahren nicht nach den Mechanismen der Wärmeübertragung flüssigen Wassers an eine heiße Wand, der Konvektion, der Blasenverdampfung, der stabilen und partiellen Filmverdampfung erfolgen. Weiterhin sind die Trenn-Passier-Elemente 10 unterschiedlich hoch. Sie werden auch bei der Beregnung mit flüssigem Wasser oder allgemein vom Temperier-Fluid überströmt, sofern dies günstig für das Überströmen des jeweiligen Teilbereichs 4.i der TemperierOberfläche 4 ist. In Fig. 10 sindschematisch die mittels Schweißen auf der Temperier-Oberfläche 4 aufgebrachte Trenn-Passier-Elemente 10 dargestellt. Die Trenn-Passier-Elemente 10 sind auch mit Durchbrüchen 15 versehen, um ein Wechselwirken der Medien in benachbarten polyederartigen Räumen zu gewährleisten. In Fig. 9a, 9b und 11a, 11b ist dies beispielhaft dargestellt. Weiter dienen die Trenn-Passier-Elemente 10 neben der Gewährleistung eines guten Überströmens des Temperier-Fluids auch der Gewährleistung der Stabilität der Formwerkzeug-Randschale 1. Dafür besitzen sie eine geeignete Gestalt und sind in geeigneter Form auf der Temperier-Oberfläche 4 angeordnet. Entsprechend sind die Trenn-Passier-Elemente 10 wandartige Gebilde, die in ihrer Form und Anzahl speziell ihren Aufgaben auf der Temperier-Oberfläche 4 angepasst sind.

Dienen die eingearbeiteten oder aufgebrachten Trenn-Passier-Elemente 10 nur der mechanischen Stabilisierung der Formwerkzeug-Randschale 1 und/oder der Leitung von Fluiden auf der Formwerkzeug-Randschale 1 , reichen diese nicht unbedingt bis direkt auf die Temperier-Oberfläche 4 der Formwerkzeug-Randschale 1. Je nach Erfordernis weisen die Trenn-Passier-Elemente 10 unterschiedliche Höhen auf, um entweder die optimale mechanische Stabilität und/oder die Strömungsführung optimal zu gewährleisten.

Der Rückraum bzw. Temperierraum 3 kann, wie in Figur 2 dargestellt, je nach Anforderung mit einem Gehäuseteil, wie beispielsweise einer Abschlussplatte 9 verschlossen werden. Vorteilhaft lassen sich in die Abschlussplatte 9 Einrichtungen zur Temperierung und Abgrenzung der Temperier-Oberfläche 4 integrieren, soweit das technologisch bzw. geometrisch vorteilhaft ist. Durch die Abschlussplatte 9 lassen sich Zu- und Ableitungen für das Betreiben der Temperier-Vorrichtungen für die Temperier-Oberfläche 4, sowie Zuleitungen für die Sensorik führen und befestigen. Die Abschlussplatte 9 ist dabei aus demselben Formwerkzeugmaterial gefertigt, kann aber auch aus einem anderen Material bestehen. Sie kann aus Metall bestehen. Je nach konstruktiver Gestaltung des Formwerkzeuges 14 kann die Abschlussplatte 9 tragende oder nichttragende Funktion haben. Entsprechend nimmt sie dabei Kräfte des Arbeits- bzw. Formprozesses auf. Die Abschlussplatte 9 des Temperierraums 3 kann auch die Form eines Abschlusskastens haben. Dabei ist vorteilhaft, dass neben der Befestigung von Zuleitungen und Vorrichtungen für die Temperierung, das anfallende Kühlwasser gut erfasst und weiter geleitet werden kann. Dabei muss dieser Abschlusskasten nicht unbedingt im Rückraum des Formwerkzeuges 14 starr befestigt werden. Die Abschlussplatte 9 darf jedoch einer Öffnung des Temperier-Raumes 3 zur Atmosphäre nicht im Wege sein. Im vorliegenden Verfahren besteht immer ein Druckausgleich der polyederartigen- Räume mit der Atmosphäre. Auf der Abschlussplatte 9 lassen sich auch Trenn-Passier-Elemente 10 anordnen, wobei diese von dort bis zur Temperier-Oberfläche 4 reichen. Entsprechend eines konkreten Bedarfes haben die Trenn-Passier-Elemente 10 einen direkten Kontakt mit der Temperier-Oberfläche 4.

Der darüber hinausgehende Teil des Formwerkzeuges 14, neben der Formwerkzeug-Randschale 1 und dem Temperierraum 3, ist der Massivbereich 8 des Formwerkzeuges 14. Über die Formwerkzeug-Randschalen 1 und die darauf befindlichen polyederartigen Räume mit ihren Trenn-Passier-Elementen 10 werden Kräfte des Arbeits- bzw. Formprozesses in den Massivbereich 8 geleitet.

Zur Kühlung bzw. Temperierung der schalenförmigen Formwerkzeuge 14 können verschiedene Temperier-Medien genutzt werden. Es ist bekannt, dass für die Intensität der Kühlung einer heißen Wand mit flüssigem Wasser der Wärmeübertragungskoeffizient α abhängig von der Oberflächentemperatur ϑₒ der Wand ist. Bei der Kühlung eines Formwerkzeuges 14 mit flüssigem Wasser ist die Wärmeübertragung in diesem Fall stark von der Temperatur ϑ der Temperier-Oberfläche 4 bzw. Teilbereichen 4.i der Temperier-Oberfläche 4 abhängig. Daher kann über Vorrichtungen der Temperatur-Reglung der Temperier-Oberfläche 4 die Übertragung von Wärme bzw. die Kühlintensität entsprechend der Temperatur der Temperier-Oberfläche 4 variiert bzw. gezielt geregelt werden.

Bei der Beregnung einer heißen Wand mit Wasser oberhalb der Burnout- Temperatur ϑ_{Bo} gibt es im Prinzip zwei Mechanismen der Wärmeübertragung auf die Wand. Dabei spielt die Leidenfrost-Temperatur bzw. der Leidenfrost-Punkt der Wandoberfläche eine wichtige Rolle, was seit langem bekannt ist.

Fig. 7a gibt den prinzipiellen Verlauf des Wärmeübertragungskoeffizienten α von der Wandtemperatur ϑₒ an. Die Burnout- Temperatur ϑ_{Bo} und die Leidenfrosttemperatur ϑ_{Le} sind ausgewiesen. Von der Burnout-Temperatur ϑ_{Bo} bis zur Leidenfrosttemperatur ϑ_{Le ϑϑ} ist das Gebiet der partiellen Filmverdampfung begrenzt. Dabei steigt die Wärmeübergangszahl von der Leidenfrosttemperatur ϑ_{Le ϑ}mit fallender Wandtemperatur stark an und ist bei der Burnout-Temperatur ϑ_{Bo} maximal. Beim Wärmeübertragungskoeffizienten αₘₐₓ oberhalb der Leidenfrosttemperatur ϑ_{Le} beginnt das Gebiet der stabilen Filmverdampfung. Oberhalb der Leidenfrost-Temperatur ϑ_{Le} nimmt die Wärmeübergangszahl α nur wenig mit der Temperatur zu, sie ist nahezu konstant. Beim Wärmeübertragungskoeffizienten α unterhalb der Burnout-Temperatur ϑ_{Bo} beginnt das Gebiet der Blasenverdampfung des Wassers an der heißen Wand. Endet am Punkt K die Blasenbildung an der Wand, beginnt das Gebiet der Konvektion des Wassers an der Wand.

In der vorliegenden Erfindung können alle Phänomene der Wärmeübertragung von Wasser an der heißen Wand für die Temperatur-Regelung der Teilbereiche 4.i der Temperier-Oberfläche 4 mit flüssigem Kühlfluid Wasser genutzt werden, nämlich die Bereiche der stabilen Filmverdampfung und der partiellen Filmverdampfung bei hoher Wandtemperatur ϑₒ bis zur Burnout- Temperatur ϑ_{Bo}. Bei niedrigerer Temperatur als der Burnout-Temperatur ϑ_{Bo} werden die Bereiche der Blasenverdampfung und der Konvektion genutzt. So kann beispielsweise im Teilbereich 4.1 der Temperier-Oberfläche 4 bei der Temperatur ϑ₁, im Teilbereich 4.2 bei der Temperatur ϑ₂ und im Teilbereich 4.3 bei einer weiteren Temperatur ϑ temperiert werden. In diesen Fällen kann andere Wärme pro Zeiteinheit oder Wärme-Intensität übertragen werden, was beispielsweise an den zugehörigen Wärmeübertragungskoeffizienten α₁ und α₂ in Fig. 7b abgelesen werden kann. Es ist also prinzipiell möglich, geregelt unter Ausnutzung der verschiedenen Mechanismen der Wärmeübertragung in verschiedenen Teilbereichen 4.i und zu verschiedenen Zeiten verschiedenartig Wärme übertragbar.

Gezielt kann mit den Variablen bzw. mit den Abhängigkeiten des Leidenfrost-Punktes von diesen Variablen bei der Kühlung bzw. Temperierung mit dem flüssigen Kühlfluid Wasser operiert werden. Dazu können die Bereiche der Wärmeübertragung auf der Temperier-Oberfläche 4 und damit die Intensität der Wärmeübertragung bzw. der Wärmeübergangskoeffizient in ein für den Prozess günstiges Temperatur-Gebiet gezielt verschoben werden. Beispielsweise spielt die Oberfläche des Materials der Temperier-Oberfläche 4, welche gezielt verändert werden kann, eine besondere Rolle für den Leidenfrost-Punkt. Die Oberfläche lässt sich chemisch, .beispielsweise durch eine oberflächliche Oxidation o.ä. und physikalisch, beispielsweise durch Bedampfen mit einer Substanz verändern. Mit Veränderung des Oberflächenmaterials verändert sich die Wechselwirkung des Wassers mit der heißen Oberfläche und mithin der Leidenfrost-Punkt und die Bereiche der Wärmeübertragung. In Fig. 8a ist das prinzipiell dargestellt. Durch eine Oberflächenbehandlung der Temperier-Oberfläche 4 oder von Teilbereichen 4.i verschiebt sich die Wärmeübertragung von der gestrichelt gezeichneten Art in die Art mit durchgezogener Linie mit den jeweils sich ändernden Wärmeübertragungskoeffizienten α und zugehörigen Wandtemperaturen ϑ_{o.}

Es kann aber auch ungewollte Veränderungen, z.B. chemischer Art und solche der Topografie der Wandoberfläche geben. Diese können unter dem Begriff "Alterung" des Materials zusammengefasst werden und sind zum Teil wenig kalkulierbar. Sie treten mit zunehmender Gebrauchszeit der Werkzeuge ein. Das sind beispielsweise Korrosion und verbundene Zerklüftung und Auswaschungen im mikroskopischen Bereich. Diese ereignen sich infolge der fortwährenden Beregnungs-Zyklen der heißen Temperier-Oberfläche 4 mit kaltem Wasser. Durch die Alterung ändert sich ebenfalls die Wechselwirkung des Kühlfluids Wasser mit der Wand bzw. der Temperier-Oberfläche 4. Somit ändert sich der Leidenfrost-Punkt und mit ihm die Bereiche der Wärmeübertragung. In Fig. 8b sind beispielhaft die Folgen der Alterung der Oberfläche prinzipiell sichtbar gemacht worden. Die Ausgangoberfläche mit ϑ_{Bo}, ₁ und ϑ_{Le, 1} und zugehörigen Wärmeübertragungskoeffizienten α_{k,1} und α_{max,1} geht unter Alterung in die Oberfläche mit den ϑ_{Bo, 2} und ϑ_{Le, 2} und zugehörigen Wärineübertragungskoeffizienten α_{k,2} und α_{max,2} über.

Auch mechanisch kann auf die Wechselwirkung des Wassers mit der heißen Temperier-Oberfläche 4 Einfluss genommen werden, beispielsweise durch Strukturierung der Oberfläche durch verschiedene Fräser. Dadurch ändern sich die Bedingungen der Benetzung des Wassers mit der Oberfläche. Mithin ändern sich der Leidenfrostpunkt und die zugehörigen Bereiche der Wärmeübertragung.

Im Temperaturbereich der partiellen Filmverdampfung ist im Vergleich zu dem der stabilen Filmverdampfung eine intensivere und zudem variable Kühlung möglich, je nach der Temperatur ϑ der Wand. Im Unterschied zum Bereich der stabilen Filmverdampfung, wo sich die übertragbare Wärme mit der Temperatur ϑ der Wandoberfläche nur wenig ändert, kann im Temperaturbereich der partiellen Filmverdampfung je nach Temperatur ϑ der Oberfläche des Teilbereichs der Temperier-Oberfläche 4.i unterschiedliche Wärme übertragen werden. Im Bereich der stabilen Filmverdampfung ist die übertragene Wärme meist nahezu konstant und unabhängig von der Temperatur ϑ der Oberfläche, weil der ausgebildete Dampffilm das verhindert. Auch das kann gezielt ausgenutzt werden. Der Regelmechanismus kann hier aufgrund der geringen Temperaturabhängigkeit etwas träger sein.

Es gibt verschiedene Temperier-Möglichkeiten. Wird die Temperier-Oberfläche 4 mit flüssigem Kühlfluid Wasser gekühlt, so werden erfindungsgemäß zu dessen flächiger Verteilung Beregnungsdüsen 6 eingesetzt. Es handelt sich in der vorliegenden Erfindung um eine Beregnungs-Kühlung. In ihrer Art ist die Beregnungsdüse 6 eine flächige Beregnungsvorrichtung für flüssiges Kühlfluid Wasser, ohne Zuhilfenahme eines Trägergases für das Kühlfluid. Es ist charakteristisch, dass durch die Beregnungsdüse 6 flüssiges Kühlfluid Wasser in Tropfen zerteilt und in dem umgebenden Gas, was im AllgemeinenLuft ist, verteilt wird. Die über die Beregnungsdüse 6 erzeugte Tropfengröße hängt von den Betriebs-Parametern Wasserdruck und Wassertemperatur und von der Geometrie der Beregnungsdüse 6 ab. Die Art der Betreibung der Düse wirkt auch auf die Bereiche der Wärmeübertragung. Die durch die Beregnungsdüse 6 erzeugte geometrische Grundform des Tropfen-Kollektives ist ein Tropfen-, Beregnungs- oder Sprühkegel. Wichtig ist, dass die Tropfen des Sprühkegels flächig auf der auftreffenden Geometrie der Temperier-Oberfläche 4 verteilt werden, so dass sie auf dieser einen einheitlichen durchgehenden flüssigen Film bilden, unabhängig vom jeweiligen Mechanismus der Wärmeübertragung. Durch die geometrische Gestaltung der Beregnungsdüse 6 kann die Verteilung von der geometrischen Form eines Beregnungskegels variiert werden. Auf einer ebenen Temperier-Oberfläche 4 würden die Tropfen des Beregnungskegels z.B. in Form einer Kreisscheibe oder einer Ellipse gestreut werden. In Abhängigkeit der Gestaltung der Beregnungsdüse 6 sind auch andere geometrische Formen der Beregnung möglich. Es erfolgt in jedem Fall das flächige Benetzen der Temperier-Oberfläche 4 der Formwerkzeug-Randschale 1 mit dem Tropfen-Kollektiv der Beregnungsdüse 6. Durch die Wahl der Betriebsparameter der Beregnungsdüse 6 oder auch durch deren geometrische Form kann die Beregnungsdichte bzw. Wasserbeaufschlagungsdichte auf der Temperier-Oberfläche 4 der Formwerkzeug-Randschale 1 eingestellt werden. Unter Beregnungsdichte bzw. Wasserbeaufschlagungsdichte wird die auf die Oberfläche aufgetragene Wassermenge pro Flächen- und Zeiteinheit verstanden. Durch die Wasserbeaufschlagungsdichte kann auf den Leidenfrost-Punkt und die damit verbundenen Bereiche der Wärmeübertragung Einfluss genommen werden. Die Gestaltung der Beregnung mit dem flüssigen Kühlfluid Wasser hängt von den Gegebenheiten und Erfordernissen der Beregnung der Temperier-Oberfläche 4 bzw. des Teilbereichs 4.i der Temperier-Oberfläche 4 ab. Es können bspw. auch mehrere Beregnungsdüsen 6 in einer Abschlussplatte 9 oder einer anderen Halterungs-Vorrichtung integriert und zur Beregnung verwendet werden.

Sollte beispielsweise mit Wasser und der Beregnung der Temperier-Oberfläche 4 durch diesesWasser temperiert werden, um die angeführten Mechanismen der Wärmeübertragung zu nutzen, ist die vertikale Ausrichtung der Temperier-Oberfläche 4, und mithin des Werkzeugs selber, erforderlich. Das Wasser muss nach dem Beregnen der heißen Temperier-Oberfläche 4 oder des Teilbereiches 4.i abfließen können, um die Wärmeübertragung unterbrechen zu können. Dazu sind die Trenn-Passier-Elemente 10 entsprechend gestaltet, so dass ein problemloses Abfließen des Kühlfluides Wasser möglich ist.

Es kann aber auch zu Abwandlungen kommen, wenn die vertikale Ausrichtung des Teilbereiches 4.i nicht möglich ist, beispielsweise ist dazu die schnelle Absaugung von entstehenden Wasseransammlungen in Hohlräumen von horizontal ausgerichteten Kernen des Werkzeuges auch möglich und gegebenenfalls erforderlich. Wichtig für das vorliegende Verfahren ist die Benetzung der Temperier-Oberfläche 4 mit einem Wasserfilm, der fortlaufend erneuert werden muss, um den beabsichtigten optimalen Wärmeübergang entsprechend der erwähnten Wärmeübertragungsmechanismen, wie dem der partiellen Filmverdampfung sowie den anderen genannten Wärmeübertragungsmechanismen, reproduzierbar zu gestalten.

Durch die Regelung der Temperatur ϑ der Temperier-Oberfläche 4 wird die örtliche Kühlintensität bzw. die örtliche Übertragung von Wärme auf die Formwerkzeug-Randschale 1 beeinflusst. Die Temperatur ϑ der Temperier-Oberfläche 4 hat den größten Einfluss auf die Übertragung von Kühlleistung. Das bedeutet, dass durch die Regelung auf die Soll-Temperatur der Oberfläche des Teilbereichs 4.i gezielt der Wärmeübertragungskoeffizient α und damit die Intensität und Zeit der Wärmeübertragung beeinflusst werden. Wird in einem Teilbereich 4.i die Oberfläche auf die Soll-Temperatur ϑ₁ eingeregelt, so kann in der gleichen Zeit mehr Wärme übertragen werden, als wenn in einem Teilbereich 4.i+ 1 auf die Oberflächentemperatur ϑ₂ eingeregelt wird, siehe dazu Figur 7b. Das heißt, dass die Kühlung des Werkstückes über die Temperatur-Regelung der Teilbereichs-Oberflächen 4.i der Temperier-Oberfläche 4 gezielt geregelt werden kann. Anders ausgedrückt kann gesagt werden, dass der Wärmestrom vom Werkstück auf die Gravur gezielt über die Temperatur-Regelung der Teilbereichs-Oberflächen 4.i der Temperier-Oberfläche 4 geregelt werden kann. Durch die vorausgesetzte Konturnähe des vorliegenden Verfahrens ist die Zeit für die Wirkung der Wärmeströme in den einzelnen Teilbereichen 4.i im Vergleich zu herkömmlichen Verfahren gering. Denn in klassischen Werkzeugen müssten große Materialdicken des Werkzeuges überwunden und damit lange Zeiten für die Wirkung der beschriebenen Regelung einkalkuliert werden. Diese langen Zeiten hat man in der Produktion von Gussteilen im Allgemeinen nicht. Außerdem wäre dort mit beträchtlicher Querleitung der Wärme im Werkzeug zu rechnen, was die örtlich begrenzte Übertragung von Wärme in Frage stellen bzw. unmöglich machen würde. Zudem hat im vorliegenden Verfahren die Wärmeübertragung über die Einwirkung auf den Wärmeübertragungskoeffizienten α des Teilbereichs einen großen Spielraum. Sollten bspw. die Materialeigenschaften in einem bestimmten Teilbereich 4.i den technologischen Anforderungen nicht genügen, dann kann die Wärmeübertragung in dem Teilbereich angepasst werden. Es ist damit gewährleistet, dass ein Werkzeug, auch nach der Fertigung, mit verschiedenen Parametern gefahren und auf verschiedene Anforderungen an den Formling bzw. das Werkstück eingestellt werden kann. Es muss nicht zur Neuanfertigung des Werkzeuges selber kommen.

Das betrifft u.a. die schwierige Formfüllung dünner Wände an ausgedehnten Werkstücken, wie Strukturbauteilen, die von Seiten der Konstruktion im Vorfeld oft schwierig beeinflusst werden kann. Auch auf die Veränderung der Korngröße einiger Bereiche des Werkstückes kann durch Veränderung des Wärmestromes eingewirkt werden.

Durch die Trenn-Passier-Elemente 10 der polyederartigen Räume kann an gewünschten Stellen der Temperier-Oberfläche zudem ein nahezu kontinuierlicher Übergang der Übertragung der Wärme zwischen den polyederartigen Räumen erreicht und damit ein abruptes Übergangsverhalten der Temperierung an den Trenn- Passier- Elementen 10 vermieden werden. Das ist durch Gestaltung der Wechselwirkung des Temperier- Mediums Wasser zwischen den benachbarten polyederartigen Räumen bzw. über deren Trenn- Passier-Elemente 10 möglich. Über Durchbrüche 15 oder Höhen der einzelnen Trenn- Passier-Elemente 10 oder gewolltes Überströmen von Trenn- Passier- Elementen kann die Wechselwirkung der Medien zwischen den polyederartigen Räumen in weiten Grenzen gestaltet werden.

Die Wechselwirkung des Temperiermediums mit der Teilbereichs- Oberfläche 4.i kann jederzeit abgestellt werden. Sollte das gewünscht sein, kann dadurch nahezu augenblicklich die Wärmeübertragung unterbrochen werden. Durch das Ein- bzw. Ausschalten des Temperier-Mediums wird die thermische Wechselwirkung mit der Temperier-Oberfläche 4 gezielt begonnen bzw. unterbrochen. Bspw. wird das Wasser aus der Düse abgestellt und läuft augenblicklich von der Temperier- Oberfläche 4, bzw. einem Teilbereich 4.i, und die entsprechend gestalteten Trenn- Passier- Elemente 10 ab.

Die Möglichkeit der verschiedenen Temperierung in jedem Teilbereich 4.i bedeutet auch, dass unterschiedliche Arten der Medien eingesetzt werden können. Voraussetzung ist die Einstellung der entsprechenden Wechselwirkung der Medien in benachbarten polyedrischen Räumen. Wird beispielsweise zur Temperierung Luft in einem Teilbereich und flüssiges Wasser in einem benachbarten eingesetzt werden, so sollte die Wechselwirkung der Medien in benachbarten polyederartigen Räumen herabgesetzt werden. Das ist durch Gestaltung der entsprechenden Trenn- Passier- Elemente 10 möglich. Wichtig ist die gute Benetzung der Temperier- Oberfläche 4 im Falle des Mediums Wasser und die gute Strömungsführung in beiden Fällen.
Die gute Strömungsführung im jeweiligen Teilbereich 4.i ist oft nur über geeignete Öffnung der Trenn- Passier- Elemente 10 möglich. Denn aufgrund der Gegebenheiten der konturnahen, sehr wechselhaften Topografie bzw. Geometrie der Temperier- Oberfläche 4 ist eine allgemeine Lösung zur Strömungsführung der Temperier- Fluide nicht möglich. Weiterhin sind die Trenn- Passier- Elemente 10 zwar in weitem Bereich variabel, dennoch sind Kanten und Ecken im Bereich des Aufsitzens der Stirnseite der Trenn- Passier- Elemente 10 auf die Temperier- Oberfläche 4 manchmal nicht zu vermeiden. Um dennoch einen gleichmäßigen Wasserfilm auszubilden bzw. eine gleichmäßige Benetzung der Oberfläche mit Wasser zu erreichen ist die teilweise Öffnung der Trenn- Passier- Elemente 10 notwendig. Fig. 11 zeigt ein Beispiel der Notwendigkeit einer Öffnung des Trenn- Passier- Elementes an dessen Stirnseite zur Temperier- Oberfläche 4 in einem schwer überströmbaren Gebiet a. Durch die stark wechselnde Topografie, also die geometrisch starke Änderung der Höhe der Oberfläche in dem eng begrenzten Gebiet a der Temperier- Oberfläche, ist das Überströmen in diesem Gebiet a bzw. die Strömungsführung auf der Temperier- Oberfläche im Gebiet a mittels Beregnungskühlung sehr schwierig. Daher wird an der Stirnseite des Trenn- Passier-Elementes ein kleiner begrenzter Spalt eingearbeitet und somit für gutes Überströmen in Gebiet a gesorgt. Die Benetzung mit einem Wasserfilm ist nun auch in diesem Gebiet a möglich. Das ist notwendig, denn im Fall der Temperierung des Teilbereichs 4.i mit Wasser müssen sämtliche Gebiete der Oberfläche des Teilbereichs 4.i mit einem Wasserfilm überströmt werden, denn nur so ist die geregelte Wärmeübertragung von Wasser an die heiße Wand möglich. Die Auslegung der Temperier- Oberfläche 4 mit geeigneten Trenn- Passier-Elementen 10 ist daher für das vorliegende Verfahren sehr wichtig. Dabei ist es nicht unbedingt notwendig, das Trenn- Passier- Element 10 in einem Bereich beispielsweise mit einem Durchbruch zu versehen. Eine strömungsgünstige Ausarbeitung des Trenn- Passier-Elements 10, beispielsweise das kalottenartige Auswölben im Bereich der der Temperier-Oberfläche 4 zugewandten Stirnflächen, kann auch zum gleichen Ziel führen, wie es als Beispiel in Fig. 10 mit dem zweiten Trenn- Passier- Element 10 von rechts dargestellt ist. Im Falle des Temperierens bzw. Kühlens mit Wasser ist sie Voraussetzung für die Übertragung der Wärme entsprechend der verschiedenen Mechanismen der Wärmeübertragung.

Die Strömungsführung hat das Ziel der gleichmäßigen Benetzung des jeweiligen Teilbereiches der Temperier- Oberfläche 4.i, wobei dieser dabei entstehende Flüssigkeitsfilm durch die Beregnung fortlaufend ausgetauscht werden muss, um die Wärmeübertragung reproduzierbar zu gestalten. Wird nicht überall benetzt, oder kann sich der Wasserfilm nicht fortlaufend erneuern, so kann dort in dem nicht benetzten Gebiet diese Wärmeübertragung mittels Wasser nicht stattfinden. Die Wärmeübertragung wäre nicht reproduzierbar bzw. in den Bereichen, die der Strömung nicht oder schwer zugänglichen sind, nicht oder ungenügend möglich.

Auch die wechselnde Temperierung mit verschiedenen Temperier- Medien auf ein und demselben Teilbereich 4.i ist möglich: So lässt erst mit einem gasförmigen Medium und danach mit flüssigem Wasser temperieren bzw. kühlen. Das wird durch die Möglichkeit des Abstellens des jeweiligen Temperier- Mediums möglich: Es wechselwirkt nach dem Abstellen nicht mehr mit der Temperieroberfläche des jeweiligen Teilbereichs, weil es durch das Abstellen nicht mehr da ist. Wasser fließt von der vertikalen Temperier- Oberfläche 4 bzw. dem Teilbereich 4.i augenblicklich ab. Ist eine Vorrichtung für die Zuführung eines anderen Mediums installiert, bspw. für gasförmige Medien, dann kann diese nachfolgend für den gleichen Teilbereich zum Einsatz kommen.

Prinzipiell sind auch feste Medien wie beispielsweise Eis sowie Gemische aus festen und flüssigen Medien wie beispielsweise Eiswasser oder festen und gasförmigen Medien wie beispielsweise Trockeneis-Luft für die Kühlung geeignet und werden zu dieser verwendet. Es ist jedoch darauf zu achten, dass die Temperier-Oberfläche 4 dadurch nicht unbeabsichtigt chemisch verändert, belegt oder zugesetzt und dadurch eine stabile Temperierung verhindert wird. Weiterhin ist es bei festen Temperiermedien möglich, dass diese nach dem Abstellen des Mediums noch auch der Temperier- Oberfläche verbleiben und dadurch eine zeitliche begrenzte weitere Wechselwirkung mit dieser stattfinden kann.

Auch Wärmerohre, auch bekannt als "heat pipes" bzw. Zwei-Phasen-Thermosiphon, sind für die Temperierung von Teilbereichen 4.i der Temperier-Oberfläche 4 einsetzbar. Diese müssen so angebracht sein, dass sie in ihrer charakteristischen Weise in thermische Wechselwirkung mit dem Teilbereich 4.i der Temperier-Oberfläche 4 treten können. Die Kühlung mittels der genannten Wärmerohre wird - durch die konstruktionsbedingte Anbindung - als Kontakttemperierung angesehen, wobei bei einer entsprechenden Anordnung die Kontakttemperierung auch die Funktionsweise einer fluiden Kühlung besitzt. Prinzipiell lassen sich auch elektrische Vorrichtungen wie z.B. Peltier-Elemente o.a. zur Kontakt-Kühlung der Temperier-Oberfläche 4 bzw. von Teilbereichen 4.i verwenden. Diese werden in Festkörperkontakt zum jeweiligen Bereich der Temperier-Oberfläche 4 gebracht.

Das externe Heizen über die Temperier-Oberfläche 4 der Formwerkzeug-Randschale 1 bzw. von Teilbereichen 4.i der Formwerkzeug-Randschale 1 erfolgt durch Einbringen von externer thermischer Energie über externe Heizmedien 13. Die Heizung lässt sich über Strahlung, Strömung oder Kontakt externer Heizmedien 13 realisieren. Durch die geeignete Anordnung von Heizmedien 13, wie beispielsweise Brennern, Gebläsen, Strahlern oder elektrischen Heizelementen auf, in, sowie unter der Temperier-Oberfläche 4, werden vom Rückraum 3 des Formwerkzeuges 14 her Teilbereiche der Temperier-Oberflächen 4 der Formwerkzeug-Randschalen 1 extern beheizt. So werden beispielsweise Brenner mit geeigneter Leistung und in geeignetem Abstand hinter der Temperier-Oberfläche 4 positioniert. Elektrische Heizelemente lassen sich direkt unter die, auf die, sowie vor der Temperier-Oberfläche 4 eines entsprechenden Teilbereiches 4.i der Temperier-Oberfläche 4 anordnen. Externes Heizen von Teilbereichen 4.i ist beispielsweise im Fall der Verarbeitung thermoplastischer Werkstoffe im Spritzguss vorteilhaft, um das Werkstück bearbeiten zu können. Das externe Heizen vom Rückraum 3 der Formwerkzeug-Randschale 1 her stellt ein flächiges gleichmäßiges Heizen der Temperier-Oberfläche 4 oder von Teilbereichen 4.i der Temperier-Oberfläche 4 dar. Hinzu kommt ein weiterer Vorteil des vorliegenden Verfahrens: Es kann unabhängig vom Prozesszyklus des Formens des Werkstückes temperiert werden, d.h. auch während der Öffnungszeiten des Formwerkzeuges und während der Entnahme des Werkstückes. Auch vor, während oder nach dem Füllen der Kavität 2 ist es möglich, dass in verschiedenen Teilbereichen 4.i der Temperier-Oberfläche 4 ein separates Temperier-Regime abläuft, um auf die geforderten Zielbedingungen einzuwirken. Dabei wird Temperier- Regime so verstanden, dass in Abhängigkeit der Zeit thermische Energie in verschiedene Intensität auf die Temperier- Oberfläche 4 übertragen werden kann: So kann extern geheizt oder mit der technologisch geforderter Intensität unterschiedlich gekühlt werden. Die Abfolge der thermischen Behandlungsschritte der Formwerkzeug-Randschalen 1 ist entsprechend technologischer Anforderungen einstellbar. Die nötigen Vorrichtungen für die Wärmeübertragung sind dazu anzuordnen.

Je nach technologischen Erfordernissen, beispielsweise um bestimmte Materialeigenschaften des Gussteiles einzustellen, lassen sich verschiedene Temperier -Regimes des erfindungsgemäßen Kühlens und Heizens in den Teilbereichen 4.i der Temperier-Oberfläche 4 durchführen. Dazu können die Kriterien der Erforderlichkeit der Regelung der Temperierungs-Vorrichtungen bereits im Stadium der Konstruktion klar definiert werden. Das erhöht die Planbarkeit des Prozesses wesentlich, weil dadurch beispielsweise Simulationen im Vorfeld möglich sind.

Das Temperier-Regimes bzw. die Regelung auf bestimmte Temperaturen der Teilbereiche der Temperier- Oberfläche 4 lässt sich prinzipiell von Prozesszyklus zu Prozesszyklus verändern. Über die unterschiedlichen Temperier-Möglichkeiten der Teilbereiche 4.i ist daher auch eine Optimierung der Temperierung der gesamten Formwerkzeug-Randschale 1 auf verschiedene gewünschte thermischen Ziel-Zustände der Formwerkzeug-Randschale 1 bzw. hinsichtlich der Übertragung der Kühlintensität bzw. Wärme vom Werkstück über die Gravur auf die Temperier- Oberfläche 4 der Formwerkzeug-Randschale 1 geregelt möglich. Durch die Möglichkeit, verschiedene Temperierungen bzw. Temperier-Regimes zu realisieren, kann kostengünstig über vorherige Simulationen der Weg zu optimalen Gussteilen, bei Schonung des Formwerkzeuges 14, minimaler Prozesszeit gefunden werden.
Schließlich können im praktischen Einfahren des neuen Formwerkzeuges 14 die Bedingungen der Temperierung noch weiterhin angepasst werden, so dass optimale Gieß- und Erstarrungsbedingungen für das Gussteil erreicht werden. Beispielsweise kann die Soll-Temperatur in einem Teilbereich 4.i der Temperier-Oberfläche 4 verändert werden. Kühlt man mit flüssigem Wasser und befindet man sich bspw. im Bereich der partiellen Filmverdampfung, so verändert sich durch die Veränderung der Soll- Temperatur für den Teilbereich auch die Intensität bzw. der Wärmeübergangskoeffizient. Durch die Intensität bzw. die übertragene Wärme pro Zeit, ändert sich die Zeit für die Einstellung der Soll-Temperatur im Teilbereich 4.i. Es lässt sich daher mit dem erfindungsgemäßen Verfahren noch im laufenden praktischen Gießbetrieb in veränderbarer Weise Einfluss auf das Formwerkzeug 14 und das Werkstück bzw. den Formling nehmen.
Das ist von besonderer Wichtigkeit: Bei den zurzeit verwendeten Werkzeug- Stählen für Gießformen ist im Laufe des Betriebes durch das vorliegende, verfahrensbedingte ständige Kontaktieren der Temperier- Oberfläche 4 mit kaltem Wasser mit Alterungserscheinungen der Oberfläche zu rechnen, sollten keine Vorkehrungen gegen Alterung getroffen worden sein, wie beispielsweise eine Beschichtung o.ä. Es ist also möglich, über die veränderte Wahl der Soll- Temperatur der Oberfläche des Teilbereichs 4.i, der Alterung dieser Oberfläche entgegenzuwirken. So sind nur die Zeit- Abhängigkeit für die Wärmeübertragung (Intensität) der veränderten Oberfläche zu kennen und die Temperatur- Regelung der Temperier-Oberfläche im Teilbereich 4.i bzw. mehrerer Teilbereiche 4.i entsprechend darauf einzustellen. In Fig. 12 ist das symbolisch dargestellt: Die gestrichelte Kurve symbolisiert die Ausgangsoberfläche des Teilbereichs 4.i der Temperier- Oberfläche 4. Sie wird durch Alterung nach rechts verschoben. Das heißt der Leidenfrostpunkt und die Gebiete der Wärmeübertragung verschieben sich zu höherer Wand- Temperatur. Würde der Temperatur-Regler bei gleicher Soll- Temperatur ϑ_{Wandzustand 1} des Teilbereichs weiter operieren, so würde der Wand pro Zeiteinheit durch die unterschiedlichen Wärmeübergangskoeffizienten α eine viel größere Wärme entzogen. Das heißt, dass die gealterterte Wand schneller abkühlen würde, weil bei derselben Soll- Temperatur ϑ_{Wandzustand 1} ein größerer Wärmeübergangskoeffizient α vorliegt. Der Temperatur- Regelmechanismus müsste mit größerer Kühlintensität arbeiten. Bei schnell ablaufenden Kühl- Prozessen, wie im vorliegenden Verfahren, kann eine höhere Kühlintensität bedeuten, dass diese sich auf Grund der starken Temperaturabhängigkeit des Wärmeübertragungskoeffizienten α verdoppelt. Das ist leicht möglich, wenn man sich im Bereich der partiellen Wärmeübertragung befindet und eine starke Abhängigkeit des Wärmeübertragungskoeffizienten α von der Temperatur ϑ der Wand- Oberfläche vorliegt. Das kann für den Temperaturregler eine Quelle der Instabilität darstellen. Vorteilhafter ist es daher, die Soll- Temperatur ϑ der Oberfläche von der Temperatur ϑ_{Wandzustand 1} auf die Temperatur ϑ_{Wandzustand 2} abzusenken. Das bedeutet, dass man jetzt, im Fall der gealterten Oberfläche, bei tieferer Wandtemperatur ϑₒ der Temperier-Oberfläche 4 operiert, aber die gleiche Wärme entzieht wie vorher im nicht- gealterten Fall. Die Stabilität des Produktionsprozesses kann dadurch aufrecht erhalten bleiben. Man würde sich auch dahingehend in einem stabilen Bereich des Prozesses befinden, weil bei zunehmender Wandtemperatur ϑₒ im Bereich der Blasenverdampfung die Intensität der Wärmeübertragung mit der Wandtemperatur ϑₒ steigt. Durch den Wärmeübertragungsmechanismus der Blasenverdampfung wird dem Steigen der Wandtemperatur mit größerer Kühlintensität des Wassers an die Wand entgegengewirkt.

Auf diese Zwänge der Alterung kann schon im Zuge der Konstruktion der Gieß- Werkzeuge Einfluss genommen werden, indem man die Alterung des Wandmaterials in den Regelmechanismus einbezieht. Solche Material- Veränderungen können beispielsweiseim Vorfeld der Konstruktion ermittelt und die zugehörigen Wärmeübergangskoeffizientenwerte α bestimmt werden. Erfolgt im Produktionsprozess die schrittweise Alterung des Oberflächenmaterials der Temperier- Oberfläche 4 des Teilbereichs 4.i, kommt es zu schrittweiser Anpassung des Regel- Verhaltens des Temperatur- Reglers.

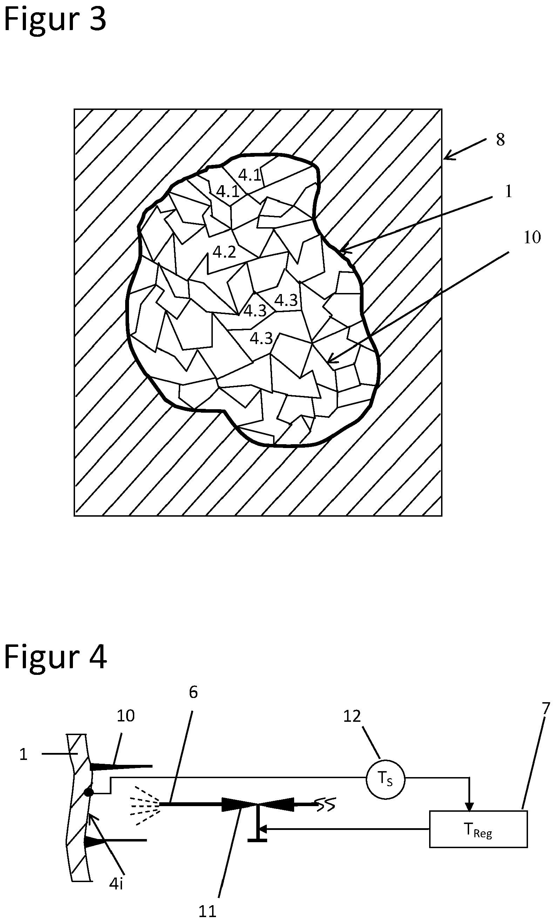

Es ist beispielsweise möglich, im jeweiligen Teilbereich 4.i der Temperier-Oberfläche 4 bei Vorgabe von dessen Soll- Temperatur mit nahezu konstanter Intensität zu beregnen bzw. zu kühlen. Eine Temperieraufgabe lautet beispielsweise, einen bestimmten Teilbereich 4.i der Formwerkzeug-Randschale 1 mit nahezu konstantem Wärmeübergangskoeffizienten αᵢ zu kühlen, weil eine bestimmte Materialeigenschaft des Werkstückes gefordert wird. Da der Wärmeübergangskoeffizient αᵢ von der Oberflächentemperatur des Wandmaterials abhängig ist, ist der entsprechende Teilbereich 4.i der Temperier-Oberfläche 4 bei einer bestimmten Soll- Temperatur bzw. in einem engen Temperaturbereich der Soll- Temperatur zu kühlen. Das kann durch gezielte Regelung der Wasserzufuhr zur Beregnungsdüse 6 dieses Teilbereichs 4.i der Temperier-Oberfläche 4 über ein Ventil 11 erfolgen, beispielsweise über ein Magnetventil 11 wie beispielhaft in Fig. 4 dargestellt.

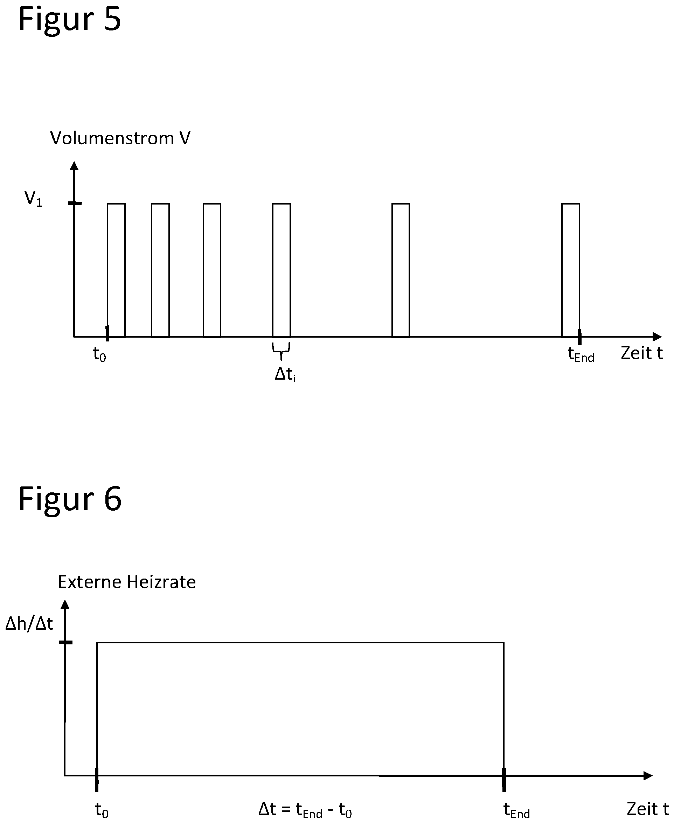

Dazu ist die Erfassung der Temperaturen an einer oder mehreren geeigneten Messstellen des Teilbereiches 4.i der Temperier-Oberfläche 4 mittels Sensoren 12 wie beispielsweise Temperatursensoren 12 möglich. In Fig. 4 ist beispielhaft nur ein Temperatursensor 12 eingezeichnet. Das abzuleitende Verhalten für die Regelung bzw. Regelstrecke kann beispielsweise anhand mehrerer Temperatur- Messstellen mit kontinuierlicher Berechnung einer anderen Größe erfolgen. Vom berechneten Verlauf dieser Größe ausgehend kann das Regelverhalten des Temperatur- Reglers bzw. der Regelstrecke stabil gestaltet werden. Diese Sensoren 12 können in geeigneter Weise an der und unter der Oberfläche angebracht werden, um gute und repräsentative Werte für die Temperatur ϑ oder die Temperatur- Verteilung des Teilbereichs 4.i der Temperier- Oberfläche 4 zu messen. Über einen Temperatur-Regler 7 wird entsprechend der Signal stärke des bzw. der Sensoren 12 und dessen bzw. deren Abweichung von einem oder mehreren Temperatur- Sollwerten T_{S} der Temperatur ϑ der Messstellen die Öffnungszeit Δtᵢ des Ventils 11 oder der Öffnungsgrad des Ventils 11 abgeleitet und geregelt. Die Figur 5 zeigt schematisch und beispielhaft eine diskontinuierliche Regelung des Wasser-Volumenstromes V durch die zeitweise Öffnung und Schließung des Ventils 11 beispielsweise mit einem Magnetventil 11 an, dass nur eine Öffnungsstellung hat. Die Zeitpunkte t₀ und t_{End} markieren Beginn und Ende der Temperaturregelung im Prozesszyklus. Je nach gewünschter Intensität der Kühlung wird auf eine bestimmte Ziel-Oberflächentemperatur dieses Teilbereichs 4.i der Temperier-Oberfläche 4 der Formwerkzeug- Randschale 1 geregelt.

Die Prozesse der Wärmeübertragung in den entsprechenden Gebieten der Wärmeübertragung, wie dem der partiellen Filmverdampfung und den anderen, sind mit einer schnellen Absenkung der Oberflächentemperatur ϑₒ der Wand verbunden. Die nachfolgende Wärmeleitung im Innern der Werkzeug- Randschale 1 ist abhängig vom Werkzeug- Material. Bei den gegenwärtig für Gießformen benutzten Werkzeugstählen ist die Wärmeleitung des Werkzeugmaterials meist geringer als die sehr schnelle Absenkung der Oberflächentemperatur ϑₒ durch die Beregnung mit Wasser. Es sind daher die Prozesse der Wärmeübertragung von Wasser auf die heiße Wand und weiterhin die der Wärmeleitung im Innern der Wand zu berücksichtigen und aufeinander abzustimmen.

Daher sind Temperatursensoren 12 mit geringer Trägheit bzw. schneller Erfassungszeit nötig. Das ist wichtig, denn aufgrund der Mechanismen der Wärmeübertragung wird je nach Oberflächentemperatur ϑₒ der Wand verschiedenartig Wärme übertragen. Die gesamte Regelstrecke aus Mess- und Stellgliedern muss in seinem Regelverhalten entsprechend der Bereiche der Wärmeübertragung reagieren können und darauf programmierbar sein. Ein stabiles Regelverhalten muss gewährleistet sein, um die Vorzüge der Wärmeübertragung von flüssigem Wasser auf die heiße Temperier- Oberfläche 4 in den einzelnen Teilbereichen 4.i nutzen zu können. Das heißt die Reglung der Temperatur in den einzelnen Bereichen der Wärmeübertragung mit ihren unterschiedlichen Intensitäten der Übertragung von Wärme muss von einem oder mehreren Reglern stabil gestaltet werden können, um auf die geforderten Soll- Temperaturen der Teilbereiche 4.i einzuregeln.

Zur Auswahl geeigneter Komponenten der Regelstrecke können die Ergebnisse thermischer Simulationen herangezogen werden. Sie geben Aufschluss über die Geschwindigkeit der ablaufenden Prozesse der Wärmeübertragung bei der gegebenen Strömungsbedingung von Wasser oder der jeweils verwendeten Temperier- Fluide und die daraus erwachsenden Anforderungen an die Regelstrecke.

Weiterhin ist der gegenläufige Prozess der Erwärmung der Wand von Seiten des Formlings bzw. Werkstückes über die Gravur zu berücksichtigen. Dieser Prozess ist kaum über Sensoren 12 direkt an der Oberfläche des Werkzeuges zur eingesetzten Schmelze messbar. Zudem kommt es zur Erstarrung der Schmelze und damit zur Änderung des Wärmeübergangs des Formlings auf das Werkzeug von Seiten der Gravur. Aufgrund der geringen Wandstärke der Werkstücke sind auch die Prozesse der Erstarrung schnell. Auch hier sind die Wärmeübertragungskoeffizienten α des Formlings vom Aggregatzustand und dessen Temperatur ϑ abhängig. Zudem sind beim Druckguss die Wärmeübergangskoeffizienten α der Schmelze auf die Stahloberfläche vom Druck abhängig. Der Erstarrungs- Prozess ist oft nur über Simulationen erfassbar, in denen die Wärmeübergangskoeffizienten α in plausiblen Grenzen variiert werden können. Die erhaltenen Daten sind dadurch für die Auswahl einer Regelstrecke für die Temperier- Oberfläche 4 bewertbar bzw. nutzbar.

Weiterhin müssen Regel- Szenarien für eine Alterung der Temperier- Oberfläche 4 oder für gewollte Veränderung der Temperier- Oberfläche 4 in verschiedenen Teilbereichen 4.i für das Regelverhalten der Regelstrecke hinterlegt sein. Auch alle gewollten Variablenänderungen, die für eine Verschiebung des Leidenfrostpunktes und der Bereiche der Wärmeübertragung relevant sind, müssen als Szenarien für die Regelstrecke verfügbar und von ihr beherrschbar sein. Es muss darauf zurückgegriffen werden können.

Weiterhin muss die Regelung auch unbekannten, einwirkenden Störgrößen, die deren Stabilität beeinflussen, entgegenwirken können. Diese Störgrößen sind beispielsweise im laufenden Gießbetrieb erfolgende Einflüsse, die nicht voraussehbar sind, wie beispielsweise unterschiedlich lange Gießpausen, unterschiedliche Wassertemperaturen der Kühlung, Kühlwasserqualitäten, Temperatureinflüsse in der Gießerei, unterschiedliche Arten von Trennmittelauftrag auf die Gravur vor dem Gießzyklus, variierende Temperatur der Schmelze, Ausblasen der Gravur zur Beseitigung von Gießresten, Belegung der Temperier-Oberfläche 4 infolge der Verschmutzung der Atmosphäre der Gießerei, unbeabsichtigte Änderung des Druckes der Beregnungsdüsen 6. Teils sind es Störgrößen, die die Leidenfrost-Temperatur ϑ_{Le} beeinflussen, teils sind es Größen, die auf andere Weise auf die Regelstrecke einwirken. Daher ist die Stabilität der Temperatur- Reglung der Temperier- Oberfläche 4 bzw. der Teilbereiche 4.i und die Regelung auf die vorgegebenen und sich ändernde Soll-Temperaturen ϑ wichtig für die optimale Wärmeübertragung beim Gießprozess.

Sollten andere Temperier- Medien als Wasser genutzt werden, können auch diese in ihrer Wirksamkeit durch Störgrößen beeinflusst werden. Auch hier muss die Regelstrecke den Störgrößen stabil gegenwirken.

Danach können geeignete Komponenten der Regelstrecke zusammengestellt und über Simulationen der bekannten Einflüsse und zufälligen Einfluss von Störgrößen das Regelverhalten der gesamten Regelstrecke auf Seiten der Temperier- Oberfläche 4 bzw. ihrer Teilbereiche 4.i ermittelt und optimiert werden.

Eine wichtige Frage ist die der Orientierung der Regelstrecke. Das bedeutet, die Frage nach dem Bereich der Wärmeübertragung des Wassers auf die Temperier- Oberfläche4 , in dem sich der Teilbereich 4.i der Temperier- Oberfläche 4 aktuell befindet, falls die Regelung aus dem stabilen Bereich herausgekommen ist. Das kann sich ereignen, wenn von der Regelstrecke zu träge auf einen äußeren Einfluss reagiert würde, bzw. zu träge gegen geregelt würde. Das kann auf Grund von Alterungen der Oberfläche oder durch Umwelteinflüsse auf die Temperier- Oberfläche 4 passieren. Es erfolgt die Verschiebung der Bereiche der Wärmeübertragung. Es betrifft die Maßnahmen der Reglung für das Zurück- Findens in den stabilen Bereich der Temperierung, von einem ungewollten Bereich in den gewollten der Wärmeübertragung von Wasser an die heiße Oberfläche. Wie muss optimal geregelt werden, um auf die Soll- Temperatur ϑ zurückzukehren. Es muss eine Orientierungsroutine bzw. eine Größe zur Orientierung der Regelstrecke mitgeführt werden, die gestattet, dass diese in den gewollten Bereich der Wärmeübertragung zurückkehren kann. Es muss ein ständiger Abgleich zur Orientierung der Regelstrecke erfolgen.

Weiterhin ist mit einer Verzögerung der Messwerte zur tatsächlichen Änderung der Messgröße zur rechnen und diese in die Routinen für die Regelstrecke einzubeziehen. Für das Temperier- Geschehen auf der Temperier- Oberfläche 4 gilt es, eine schnelle Änderung der Messgröße mit Sensoren 12 geringer Trägheit zu messen und zu bewerten. Ebenso sind fortlaufend Messwerte direkt unterhalb des Messpunktes der Oberfläche, also in der Formwerkzeug- Randschale 1, zu machen. Daraus ist in der Regelstrecke ständig die geeignete Regelroutine abzuleiten.

Misst man die Temperatur mit einem Sensor 12, so ist deren Änderung direkt an der Temperier- Oberfläche 4 schneller als innerhalb der Formwerkzeug-Randschale 1, was sich aus der Wärmeleitung des Materials bzw. den physikalischen Materialwerten der Formwerkzeug-Randschale 1 ergibt. Zudem sind sie im Innern der Formwerkzeug-Randschale 1 zeitlich verzögert. Aus den Temperaturverläufen lassen sich die Wärmestromdichten in Abhängigkeit der Temperaturen berechnen. Die mögliche Orientierung zur Bestimmung der Orientierung der Regelstrecke entsprechend der Bereiche der Wärmeübertragung ist beispielhaft in Fig. 13 für den Fall der Beregnung der Oberfläche dargestellt. Es ist die aus dem Temperaturverlauf von mindestens 2 Temperatur- Messpunkten ϑ_{O} an der Oberfläche und darunter berechnete Wärmestromdichte q in Watt/ m² in ihrer prinzipiellen Abhängigkeit zur Oberflächentemperatur ϑ_{O} dargestellt. Befindet man sich bei der Temperatur ϑ₁, so ist der Anstieg an die Kurve negativ. Dabei ist der Anstieg als Änderung der Wärmestromdichte q nach der Temperatur ϑ an einer gegebenen Stelle der Oberfläche zu verstehen. Links von der Leidenfrost- Temperatur ϑ_{Le} sinkt die Temperatur ϑ mit steigender Wärmestromdichte q. Bei Temperatur ϑ₂ ist das prinzipiell auch so, aber der Betrag des Anstieges ist ein anderer. Das Vorzeichen des Anstiegs ändert sich prinzipiell nicht bis zum Burnout- Punkt. Befindet man sich links vom Burnout- Punkt, also im Bereich der Blasenverdampfung, so sind die Anstiege in Abhängigkeit der Oberflächentemperatur ϑ_{O} positiv, aber in ihrem Betrag ebenfalls unterschiedlich, man vergleiche die Verhältnisse bei Temperatur ϑ₃ und ϑ₄. An der Kurve ist ein Anstieg symbolisch für den Punkt ϑ₄ , q₄ eingezeichnet. Durch kontinuierliche Bestimmung der Temperaturen ϑ an und direkt unter der Oberfläche lässt sich also die Orientierung innerhalb der Bereiche der Wärmeübertragung beispielsweise mit den Anstiegen an die q-ϑ- Kurve durchführen. Die Routinen für die einzelnen Bereiche der Wärmeübertragung werden unterschiedlich sein. Befindet man sich bspw. rechts vom Leidenfrost- Punkt im Bereich der stabilen Filmverdampfung, so sind die Anstiege der Wärmestromdichte nach der Temperatur viel geringer bis konstant. Das Regelverhalten für die einzelnen Bereiche der Wärmeübertragung wird daher unterschiedlich sein und muss entsprechend angepasst werden. Ein stabiler Betrieb der Regelung muss bei auftretenden Störeinflüssen immer wieder erreicht werden können. Die ständige Orientierung der Regelstrecke dient daher der Ergreifung von Maßnahmen um im stabilen Bereich der Regelung des Soll- Wertes zu bleiben oder um zu ihm zurückzukehren.

Weiterhin ist das anzupassende Regelverhalten von den verwendeten Oberflächen bzw. deren Materialien und deren Alterung abhängig. Auch das ist für die Regelstrecke und die stabile Regelung zur Abführung der Wärme vom Werkstück wichtig. Beispielsweise unterscheiden sich die Temperatur- Verläufe auf und unter der Oberfläche, wenn sich mit der Alterung der Temperier- Oberfläche 4 die Gebiete der Wärmeübertragung verschieben.

Auch mit anderen Sensoren 12 als Temperatursensoren 12 ist eine Orientierung in den Bereichen der Wärmeübertragung prinzipiell möglich. Es muss eine den einzelnen Bereichen zuordenbare Sensorik ausgewählt werden. Die Messwertänderung im jeweiligen Bereich sollte ebenfalls genügend groß für eine Bewertung sein.

Zudem sollten prozessbegleitende thermische o.a. Simulationen durchgeführt werden, um die Plausibilität des abzuleitenden Regelverhaltens und die Stabilität der Regelung zu gewährleisten.

Mit Dauer und Intensität der Kühlung der Formwerkzeug-Randschale 1 wird auf die Gegebenheiten des Werkstückes Einfluss genommen. Materialansammlungen des Werkstückes, wie beispielsweise dicke Werkstück-Wände, lassen sich zum Beispiel mit besonders hoher Intensität kühlen. Dazu gehören beispielsweise Bereiche von Überläufen, die im Allgemeinen dicke Wandstärken aufweisen. An dünnen Werkstückbereichen wird die Temperier-Oberfläche 4 mit niedrigerer Intensität gekühlt. Es kann technologisch nötig sein, Teilbereiche auch zusätzlich mit niedriger Intensität extern leicht zu beheizen. So kann eine Temperieraufgabe lauten, einen Teilbereich 4.i der Temperier-Oberfläche 4 eine bestimmte Zeitspanne mit zeitlich konstanter thermischer Heizrate Δh/Δt eines externen Heizers zu temperieren (Figur 6). Der Teilbereich 4.i ist also in der Zeitspanne Δtᵢ zu beheizen. Die Zeitpunkte t₀ und t_{End} markieren Beginn und Ende des Heizprozesses. Die Temperatur ϑ des Teilbereichs 4.i der Temperier-Oberfläche 4 verändert sich dadurch ständig und entsprechend ändert sich die Temperatur ϑ der Gravur. Das Ergebnis des Temperier-Regimes lässt sich nach der Entnahme des Gussteils vorteilhaft mittels Infrarotkamera auf der Gravur 5 betrachten und beurteilen. Es können aber auch andere Sensoren 12 in das Formwerkzeug 14 eingebracht werden (nicht dargestellt), die eine fortlaufende Beurteilung während des geschlossenen Formwerkzeuges 14 gestatten. Entsprechend der Mess- Ergebnisse wird das Temperier-Regime an bestimmten Teilbereichen 4.i verändert bzw. optimiert. In der Figur 7 (unten) sind zur Veranschaulichung zwei Soll- Temperaturen in zwei Teilbereichen der Temperier- Oberfläche 4 angegeben. Bei der Regelung auf diese Wand- Temperaturen ϑ₁ und ϑ₂ in den Teilbereichen 4.i der Temperier- Oberfläche 4 werden entsprechende Wärm- bzw. Kühlintensitäten, beispielsweise entsprechend α₁ und α₂, auf diese Teilbereiche 4.i der Temperier- Oberfläche 4 übertragen. Es kann in jedem Teilbereich 4.i der Temperier-Oberfläche 4 eine andere Wärmeübertragung stattfinden. Mithin lässt sich jedem Teilbereich 4.i der Temperier- Oberfläche 4 nach Fig. 3 ein anderer Wärmeübergangskoeffizient α zuordnen.

Beispielsweise ist es erforderlich, in bestimmten Teilbereichen 4.i bestimmte Temperaturvorgaben der Abkühlung zu erfüllen. So kann es notwendig sein, bestimmte Teilbereiche 4.i der Temperier-Oberfläche 4 stärker zu kühlen, um dort Werkstoffeigenschaften wie einen bestimmten mittleren Dendritenarmabstand im Werkstück einzustellen, um eine besondere Festigkeit des Werkstückes zu erreichen. Weiterhin ist es im Bedarfsfalle nötig, örtlich eine hohe Kühlintensität einzustellen bzw. mit großem Wärmeübertragungskoeffizienten α zu kühlen, um dort die Porosität aus dem wandnahen Bereich des Werkstückes zurückzudrängen und eine nachfolgende Werkstück-Behandlung wie Schweißen oder Oberflächenveredlung zu ermöglichen.

Für sensible Bereiche der Formwerkzeug-Randschalen 1, in denen beim Gießen bspw. mit Kaltlauf oder Schlierenbildung des Werkstückes gerechnet werden muss, könnte externes Heizen erforderlich werden. Dazu ist es beispielsweise erforderlich, die Formwerkzeugwand an einigen Stellen geringfügig zu erwärmen bzw. weniger zu kühlen, um das Fehlerbild zu beseitigen. Die Einflussnahme auf solche Veränderungen ist mit dem erfindungsgemäßen Verfahren möglich. Es lässt sich ebenfalls ein Temperier-Regime mit verschiedenen Temperier-Arten in einem bestimmten Teilbereich 4.i anwenden. Zuerst wird beispielsweise zur besseren Formfüllung geringfügig geheizt und nachfolgend zur besseren Erstarrung gekühlt. Es werden dafür sowohl externe Heiz- als auch Kühl-Elemente für entsprechende Teilbereiche 4.i der Temperier-Oberfläche 4 vorgesehen. So wird eine begrenzte Zeit eine externe Heizbehandlung in einem Teilbereich 4.i der Temperier-Oberfläche 4 und nachfolgend mit dem Kühlmedium Wasser in dem Teilbereich 4.i eine Kühlbehandlung erfolgen. In einem weiteren, zu Teilbereich 4.i benachbarten Teilbereich 4.i+n wird beispielsweise mit kalter Druckluft gekühlt. Damit wird erreicht, dass ausgehend von unterschiedlichen hohen Bereichstemperaturen ϑ eine einheitliche Kühl-Endtemperatur ϑ erreicht wird. Die Kühlverfahren lassen sich zeitgleich in benachbarten Teilbereichen 4.i der Temperier-Oberfläche 4 anwenden, ohne gegenseitige Beeinflussung. Auf der Temperier-Oberfläche 4 lassen sich daher verschiedene Temperier-Regimes anwenden.

Soll beispielsweise eine Temperaturabhängigkeit bzw. ein Temperatur-Gradient auf der Gravur 5 hergestellt werden, so kann es vorteilhaft sein, bestimmte Werkzeugbereiche gesondert durch zusätzliche externe thermische Energie vom Rückraum 3 her thermisch zu behandeln, andere Teilbereiche 4.i Temperier-Oberfläche 4 dagegen zu kühlen. So haben ausgedehnte Struktur-Gussteile oft dünnwandige Bereiche, in denen mit schneller Erstarrung und mangelhafter Formfüllung zu rechnen ist. Ein zusätzliches Einbringen von externer thermischer Energie kann dem Prozess der Formfüllung dienlich sein bzw. kann eine vollständige Formfüllung unter Umständen erst ermöglichen. Nach der Formfüllung soll die Schmelze gerichtet erstarren, damit es zu wenig Schwindungs-Porosität im Gussteil kommt.

Dem Aufbau von lateralen thermisch-mechanischen Spannungen auf der Gravur 5, die oft infolge ungünstiger Temperaturverteilung entstehen, wird durch Einstellen einer geeigneten Temperaturverteilung begegnet. Beispielsweise würden Zugspannungen durch geometrisch ungünstig gelegene, werkstückseitig aber geforderte Kerben in der Gravur 5 entstehen. Dabei stellen diese Kerben oft ein Zentrum erhöhter Temperatur dar, auch *hot spot* genannt. Diese kühlen sich langsamer ab als die umgebenden Bereiche. Durch diese ungleichmäßige Abkühlung entstehen Zugspannungen, die sich oft über Risse im Kerben-Grund abbauen. Durch die erfindungsgemäße örtliche Temperierung lässt sich das Temperaturverhalten in diesen Bereichen wirksam regeln. So können Bereiche in der weiteren Umgebung der Kerbe weniger gekühlt werden als der potentielle Rissbereich in der Kerbe. Dadurch wird auf die Verlängerung der Lebensdauer der Formwerkzeuge 14 in direkter Weise Einfluss genommen.

Ein weiteres weit verbreitetes Fehlerbild auf der Gravur 5 von Druckgieß-Werkzeugen ist das Auftreten von Brandriss-Netzwerken. Sie bilden sich mit zunehmendem Alter des Formwerkzeuges 14, infolge des klassischen Verdüsens eines Trennmittel-Wassergemisches auf die heiße Gravur 5 nach der Gussteilentnahme. Das nachfolgende Gießen der heißen Schmelze bedingt das schockartige Erwärmen der Gravur 5. In den Gießzyklen kommt es daher fortlaufend abwechselnd zu starken Zug- und Druckspannungen aufgrund der thermischen Wechselschock-Beanspruchung auf der Gravur 5. Durch das erfindungsgemäße Verfahren findet die Kühlung in milder Form vom Rückraum 3 des Formwerkzeuges über die dortige Temperier- Oberfläche 4 statt. Auf die Gravur 5 muss kein Trennmittel-Wassergemisches, sondern nur noch ein Trennmittelkonzentrat in Form einer kurzen Aerosolspray-Dosierung, Pulver o.ä. aufgetragen werden. Durch das erfindungsgemäße Verfahren kann diesem Fehlerbild mit Einsparung des klassischen Prozessschrittes der schockartigen Kühlung der Gravur 5 entgegen gewirkt werden. Daher kommt es durch das erfindungsmäßige Verfahren zur Verlängerung der Lebensdauer der Formwerkzeuge.

Neben der Temperierung durch das erfindungsgemäße Verfahren kann vor dem Gießen durch Evakuieren der Form oder vorherige Sauerstoffentfernung die Formfüllung zusätzlich unterstützt werden, falls mit erhöhter Oxidbildung gerechnet werden muss. Es ist bekannt, dass sich durch teilweise Oxidation der Schmelze die Viskosität in Bereichen des Auftretens der Oxide verändert.

Das Temperier-Regime des Formwerkzeuges 14 läuft entsprechend des erfindungsgemäßen Verfahrens unabhängig von Gieß- und Öffnungszeiten des Formwerkzeuges 14 und der Entnahme des Werkstückes. Es kann zu jeder Zeit auf technologische Erfordernisse des Prozesses hinsichtlich Intensität und Dauer der Temperierung optimal eingewirkt werden. Daher lassen sich sämtliche Bereiche der Temperier-Oberfläche 4 auf ihr optimales Temperier-Regime bzw. Soll- Temperatur ϑ regeln. Sollte es zweckmäßig sein, so kann das Temperier-Regime geändert werden. Im Falle der Kühlung über eine Beregnungs-Kühlung bestimmter Bereiche kann deshalb mit einer optimalen Menge an Wasser beregnet werden. Denn eine stärkere Kühlung würde eine Beeinträchtigung der Formwerkzeug-Temperierung für eine gewünschte Gestaltung der Formfüllung und der Eigenschaften des Gussteils nach sich ziehen. Die Wassermenge kann dadurch optimal gehalten werden. Falls möglich, kann bei einem hohen Wärmeübergangskoeffizienten αᵢ des jeweiligen Teilbereiches 4.i beregnet werden, wobei die Regelung der Oberflächentemperatur ϑₒ des jeweiligen Teilbereiches 4.i der Temperier-Oberfläche 4 auf die entsprechende Soll- Temperatur ϑ hin erfolgt. Aus diesen Gründen kommt es weiterhin zu erheblichen Kosten-und Zeiteinsparungen im Vergleich zur klassischen Kühlung. Andererseits lässt sich aber auch ein schonender Wärmeübergang durch die Regelung einer entsprechenden Temperatur ϑ der Temperier-Oberfläche 4 wählen, der einem niedrigeren Wärmeübergangskoeffizienten αᵢ bzw. einer niedrigen übertragbaren Wärmemenge entspricht, beispielsweise für sensible Bereiche des Werkstückes. Hier kann zum Beispiel die Temperierung schonend durch kalte Druckluft erfolgen. Das Temperier-Regime kann mit dem erfindungsgemäßen Verfahren den technologischen Zielsetzungen optimal angepasst werden. Zielgrößen sind beispielsweise minimale Taktzeiten des Prozesses, mechanischen Eigenschaften des Werkstückes und Schonung des Formwerkzeuges 14.

Die Art der erfindungsgemäßen Temperierung findet nicht in Kanälen statt, sondern stellt eine flächenhafte offene Temperierung vom Rückraum 3 des Formwerkzeuges 14 dar. Erst dadurch kann auf die üblichen plötzlichen Temperatursteigerungen bzw. Wärmeströme, die vom Formprozess in die Formwerkzeug-Randschale 1 gelangen, mit einer stabilen Temperaturregelung der Teilbereiche 4.i der Temperier- Oberfläche reagiert werden. Im Falle der klassischen offenen Kanalkühlung mit Wasser kann der plötzlich beim Formprozess stark steigende Wärmestrom vom Formhohlraum die Temperatur ϑ der Kanalwandung stark ansteigen lassen. Je nach Temperatur ϑ der Kanalwandung wird sich der entsprechende Mechanismus der Wärmeübertragung auf das Kühlmittel Wasser einstellen. Es gibt nur ein geringes Optimierungspotential für einen optimalen Kühlmittel-Einsatz, denn es strömt oder es wird angehalten. Die plötzliche Wegnahme des aktuellen Temperier- Mediums oder Ersatz durch andere sind im Allgemeinen nicht möglich. Eine schnelle Reaktion der Temperatur-Regelung auf plötzliche Wärmeströme ist daher nicht möglich. Im Falle der klassischen geschlossenen Kanalkühlung mit Wasser würde ein plötzlicher hoher Wärmeeintrag zu einer drucküberlagerten Temperaturerhöhung führen und der Systemdruck der Kühlung würde örtlich stark ansteigen. Das bedeutet die Öffnung von Sicherheitsventilen, wenn ein kritischer Druck im Kühlsystem erreicht wird. Auch hier ist die stabile Regelung der Kühlung ausgeschlossen. Da das erfindungsgemäße Verfahren seiner Art nach eine druckoffene Kühlung darstellt, gibt es keine Drucksteigerung im Kühlwasser- System: Der Druckausgleich zu den Umgebungsbedingungen findet immer statt.

Die Offene Kühlung ist grundlegend für das Verfahren, sonst kann es nicht geregelt ablaufen. Unter Druck geratend würde sich bei einem geschlossenen System der Leidenfrostpunkt verschieben. Mithin würden sich die Gebiete der Wärmeübertragung verändern. Der Leidenfrostpunkt ist abhängig vom gerade im System bestehenden Druck. Im geschlossenen System würde er sich mit einem plötzlichen starken Wärmestrom vom heißen Werkstück her schnell verändern. Die Druckerhöhung würde durch eine Temperaturüberlagerung mit dem Wasser zustande kommen, eine schlechte bis unmögliche Regelung wäre die Folge.

Im vorliegenden Verfahren kann der Druck im Rückraum 3 des schalenförmigen Formwerkzeuges höchstens den der Umgebung annehmen. Durch geeignete Temperatur-Regelung des jeweiligen Teilbereichs 4.i auf eine Soll- Temperatur bzw. ein Temperaturverteilung im Teilbereich 4.i wird eine schnelle Kühlung der Temperier-Oberfläche 4 erfolgen, solange diese erfindungsgemäß beregnet bzw. gekühlt wird. Es kann durch das gewählte Temperier-Regime frühzeitig bzw. in geeigneter Weise auf erhöhte Wärmeströme reagiert werden.

Für die Herstellung eines Formwerkzeuges 14 kann ein Halbzeug bearbeitet werden, welches beispielsweise in einem vorangehenden Herstellungs-Prozess über Umformen und Wärmebehandlungen usw. erzeugt wurde. Es können die klassischen Schmiedestähle, die für den Formwerkzeugbau von Druckgießformen verwendeten werden, auch im Fall des erfindungsgemäßen Verfahrens angewendet werden. Die Bearbeitungsoperationen für die Herstellung der Temperier-Oberflächen 4 der Formwerkzeug-Randschalen 1 vom Rückraum 3 her sind ähnlich denen, die für die Bearbeitung der Gravur 5 nötig sind. Daher können die klassischen Bearbeitungswerkzeuge für den Formwerkzeugbau auch zur Bearbeitung der Temperier-Oberflächen 4 des erfindungsgemäßen Verfahrens verwendet werden.

Die erfindungsgemäßen Formwerkzeuge 14 mit Formwerkzeug-Randschalen 1 können aber auch in einem Urform-Gießprozess hergestellt werden. Die Herstellung über den Urform-Prozess mit eventuell nachfolgender Wärmebehandlung kann möglich sein, sofern die damit erreichbaren mechanischen Eigenschaften des Formwerkzeugmaterials, wie Härte, Zugfestigkeit und Korngröße für den beabsichtigten Form-Prozesses ausreichend sind. Sollten generative Verfahren bzw. 3D -Verfahren zur Herstellung des gesamten Werkzeuges in größerem Maßstab einsetzbar sein, so ist es denkbar, das gesamte Werkzeug mit diesen Verfahren herzustellen.

Zur Einstellung optimaler Temperier-Oberflächen 4 ist es je nach technologischen Anforderungen und Art der angewendeten Temperier-Medien notwendig, die Temperier-Oberfläche 4 zu konditionieren. Die Konditionierung kann durch den Verwendungszweck des Formwerkzeuges 14, durch Materialeigenschaften des produzierten Werkstückes o.ä. erforderlich werden. Wird beispielsweise mittels Beregnungs-Kühlung gekühlt, dann ist der Leidenfrost-Punkt der Temperier-Oberfläche 4 des Formwerkzeuges 14 zu beachten. Er ist von der chemischen Zusammensetzung der Temperier-Oberfläche 4 abhängig. Erfindungsgemäß kann durch Möglichkeiten der Beschichtung der Temperier-Oberfläche 4 des Formwerkzeuges 14 auf den Leidenfrost-Punkt Einfluss genommen werden. Mit ihm ändern sich die anderen Bereiche der Wärmeübertragung. Das kann über chemische Beschichtung, bspw. chemisches Verkupfern oder die physikalische Beschichtung, bspw. über Niederschlagen eines Dampfes, erfolgen. Dabei wird die Beschichtung direkt auf die Temperier-Oberfläche 4 aufgetragen. Die Beschichtung kann aber auch in die Temperier-Oberfläche 4 eingearbeitet werden. Je nach Wahl der Beschichtung der Temperier-Oberfläche 4 wird gezielt der Leidenfrost-Punkt und mit ihm die Bereiche der Wärmeübertragung zu höheren bzw. niedrigeren Temperaturen verschoben. Das ist dann vorteilhaft, wenn beispielsweise auf hohem Temperaturniveau der Formwerkzeug-Randschale 1 eine hohe Kühl-Leistung auf diese übertragen werden soll. Es kann auch dann vorteilhaft sein, um die Lebensdauer des Formwerkzeuges 14 zu verlängern, wenn die Kühltemperatur der Formwerkzeug-Randschale 1 nach dem jeweiligen Form-Zyklus nicht zu stark abgesenkt werden soll. In unterschiedlichen Teilbereichen 4.i der Temperier-Oberfläche 4 kann die Beschichtung verschiedenartig sein.

Weiterhin lässt sich der Leidenfrost-Punkt von reinem flüssigem Kühlfluid Wasser durch lösliche Zusätze zum Kühlfluid für die gegebene Temperier-Oberfläche 4 der Formwerkzeug-Randschalen 1 verändern. Ähnlich wie im Fall der Oberflächenbeschichtung lässt sich der Leidenfrostpunkt gezielt auf eine andere Temperatur ϑ verschieben. Die Wechselwirkung des Wassers mit der Oberfläche wird dadurch verändert und es verschieben sich der Leidenfrost-Punkt und die Bereiche der Wärmeübertragung. In unterschiedlichen Teilbereichen 4.i der Temperier-Oberfläche 4 kann mit Wasser, das verschiedene chemischer Zusätze enthält, gekühlt werden. So werden zum Beispiel wasserlösliche Polymere dem Wasser beigemischt. Durch den Einsatz des Wassers mit den gelösten Polymeren ergibt sich der Vorteil, dass ein anpassbarer Kontakt des Wassers mit der Temperier-Oberfläche 4 und damit eine veränderte Wärmeabfuhr bzw. eine Verschiebung der Bereiche der Wärmeübertragung ermöglicht wird.

Bevorzugt kommt für die Beregnung der Temperier- Oberfläche demineralisiertes Wasser zum Einsatz. In normalem Leitungswasser sind immer Minerale in gelöster Form enthalten, die bei Erhitzung des Kühlwassers auf der Temperier-Oberfläche 4 abgeschieden werden können, da das Wasser beim Kühlen bis zu 100° C erwärmt wird. Werden diese Minerale abgeschieden, führt dies zu einer Schicht auf der Temperier-Oberfläche 4, die den Wärmeübergang und die Leidenfrost-Temperatur ϑ_{Le} beeinflussen. Dies führt zu einer schleichenden Veränderung der Bereiche der Wärmeübertragung. Der Einsatz von Leitungswasser ist jedoch auch möglich. Hierbei sind Zusätze erforderlich, die die Mineralien binden. Zudem lassen sich in beiden Varianten Zusätze verwenden, welche die Korrosion der Temperier-Oberfläche 4 verhindern soll.

Erfindungsgemäß lassen sich bereits in Gebrauch befindliche Formwerkzeuge 14, die ein anders geartetes Kühlsystem als das erfindungsgemäße haben, mit dem erfindungsgemäßen Verfahren oder teilweise ausrüsten. Das ist möglich, sofern eine Umarbeitung des Rückraumes 3 des klassischen Formwerkzeugs 14 das erlaubt. Beispielsweise lassen sich Partien eines klassisch gekühlten Formwerkzeuges 14 mit der erfindungsgemäßen Verfahren ausstatten, wenn z.B. Schlierenbildung und Kaltlauf eines Werkstückes verhindert werden soll.

### Zusammenstellung der Bezugszeichen:

1 - Formwerkzeug-Randschale
2 - Kavität
3 - Rückraum, Temperierraum
4 - Temperier-Oberfläche
4.i, 4.1, 4.2, 4.3 - Teilbereich, Teilbereichs- Oberfläche
5 - Kontur, Gravur
6 - Beregnungsdüse
7 - Temperatur-Regler
8 - Massivbereich des Formwerkzeuges
9 - Abschlussplatte
10 - Trenn- Passier- Element
11 - Ventil, Magnetventil
12 - Sensor,. Temperatursensor
13 - externes Heizmedium
14 - Formwerkzeug
15 - Durchbruch
16 - Schweißnaht
tᵢ - Zeitpunkt
α, αᵢ - Wärmeübergangskoeffizient
ϑ, ϑᵢ - Temperatur
a - Gebiet, Durchbruch
A - Anstieg an den Punkt ϑ₄,q₄
K- Beginn des Gebietes der Konvektion des Wassers an der Wand, mit sinkender Wand-Temperatur
V - Volumenstromes

## Patentansprüche

1. Verfahren zur konturnahen flächenhaften Temperierung von schalenförmigen Formwerkzeugen (14) mit Formwerkzeug-Randschalen (1), wobei die Temperierung des Formwerkzeuges (14) auf einer konturnahen Temperier-Oberfläche (4) mit aneinander angrenzenden, stegartig oder wandartig getrennten Teilbereichen (4.i) vom jeweiligen Rückraum (3) der Formwerkzeug- Randschalen (1) des Formwerkzeuges (14) und/oder der jeweiligen Formwerkzeug-Randschale (1) des Formwerkzeuges (14) her erfolgt und die schalenförmigen Formwerkzeuge (14) mit den jeweiligen Formwerkzeug-Randschalen (1) zwei- oder mehrteilig ausgeführt sind,
**dadurch gekennzeichnet,**
**dass** die Temperierung als Kühlung in Form der Regelung der Temperatur auf der Temperier-Oberfläche (4) örtlich unterschiedlich in Teilbereichen (4.i) der Temperier-Oberfläche (4) entsprechend der Temperaturbereiche der Konvektion, des Blasenverdampfens, der partiellen und/oder stabilen Filmverdampfung des flüssigen Kühlfluids Wasser erfolgt, wobei die Temperierung der Temperier-Oberfläche (4) und/oder die Temperaturverteilung in den einzelnen Teilbereichen (4.i) der Temperier-Oberfläche (4) mittels unterschiedliche Temperier-Regimes der Teilbereiche (4.i) der Temperier-Oberfläche (4) geregelt wird und wobei die Temperierung in einem zur umgebenden Atmosphäre hin offenen Rückraum (3) erfolgt.

2. Verfahren nach Anspruch 1,
**dadurch gekennzeichnet,**
**dass** bei der Temperierung mittels Wasser als Temperiermedium dieses über flächige Beregnung auf der Temperier-Oberfläche (4) und/oder auf den Teilbereichen (4.i) der Temperier-Oberfläche (4) verteilt wird, sodass diese flächig benetzt werden und sich ein flüssiger Film bildet.

3. Verfahren nach einem der vorhergehenden Ansprüche,
**dadurch gekennzeichnet,**
**dass** eine Verschiebung der Temperaturbereiche der Konvektion, des Blasenverdampfens, der partiellen und/oder stabilen Filmverdampfung durch die Beimischung von löslichen Bestandteilen zum Kühlfluid Wasser erfolgt.

4. Verfahren nach einem der vorhergehenden Ansprüche,
**dadurch gekennzeichnet,**
**dass** eine Verschiebung der Temperaturbereiche der Konvektion, des Blasenverdampfens und/oder der partiellen und/oder stabilen Filmverdampfung durch eine chemische oder physikalische Beschichtung der Temperier-Oberfläche (4) erfolgt.

5. Vorrichtung zur Durchführung des Verfahrens nach Anspruch 1 bis 4 zur konturnahen flächenhaften Temperierung von schalenförmigen Formwerkzeugen (14) mit Formwerkzeug-Randschalen (1), wobei die Formwerkzeug-Randschalen (1) auf dem der jeweiligen Gravur (5) oder Kontur (5) gegenüberliegenden Rückraum (3) eine Temperier-Oberfläche (4) mit Teilbereichen (4.i) aufweisen und die schalenförmigen Formwerkzeuge (14) mit den jeweiligen Formwerkzeug-Randschalen (1) zwei- oder mehrteilig ausgeführt sind,
**dadurch gekennzeichnet,**
**dass** die Teilbereiche (4.i) der Temperier-Oberfläche (4) einen unregelmäßigen, vieleckigen Grundriss aufweisen und mittels wandartigen Trenn- Passier- Elementen (10) seitlich begrenzt sind, wobei die Teilbereiche (4.i) mit den wandartigen Trenn- Passier- Elementen (10) einen polyederartigen Raum bilden.

6. Vorrichtung nach einem Anspruch 5,
**dadurch gekennzeichnet,**
**dass** die Trenn- Passier- Elemente (10) Durchbrüche (15, a) besitzen.

7. Vorrichtung nach einem der vorhergehenden Ansprüche 5 und 6,
**dadurch gekennzeichnet,**
**Dass** die Trenn- Passier- Elemente (10) mit der Temperier-Oberfläche (4) verbunden und/oder aus der Formwerkzeug-Randschalen (1) ausgearbeitet sind.

8. Vorrichtung nach einem der vorhergehenden Ansprüche 5 bis 7,
**dadurch gekennzeichnet,**
**dass** die Trenn- Passier- Elemente (10) jeweils unterschiedliche Höhen aufweisen.

9. Vorrichtung nach einem der vorhergehenden Ansprüche 5 bis 8,
**dadurch gekennzeichnet,**
**dass** die Trenn- Passier- Elemente (10) eben, wellig und/oder gewölbt sind.

10. Vorrichtung nach einem der vorhergehenden Ansprüche 5 bis 9,
**dadurch gekennzeichnet,**
**dass** die Trenn- Passier- Elemente (10) einen diskontinuierlichen Querschnittsverlauf besitzen.

11. Vorrichtung nach einem der vorhergehenden Ansprüche 5 bis 10,
**dadurch gekennzeichnet,**
**dass** die jeweilige Temperier-Oberfläche (4) und/oder die Teilbereiche (4.i) durch eine chemische und/oder physikalische Beschichtung und/oder durch eine mechanische Oberflächen-Strukturierung konditioniert sind.

## Claims

1. Method for near-contour surface temperature control of shell-shaped moulds (14) with mould rim zones (1), wherein the temperature control of the mould (14) on a near-contour temperature control surface (4) with adjacent, web-like or wall-like separated subareas (4.i) is effected from the respective rear space (3) of the mould rim zones (1) of the mould (14) and/or the respective mould rim zone (1) of the mould (14) and the shell-shaped moulds (14) are designed in two or more parts with the respective mould rim zones (1),
**characterised in that**
the temperature control as cooling in the form of temperature control on the temperature control surface (4) is locally different in subareas (4.i) the temperature control surface (4) is effected in accordance with the temperature ranges of convection, bubble evaporation, partial and/or stable film evaporation of the liquid cooling fluid water, wherein the temperature control of the temperature control surface (4) and/or the temperature distribution in the individual subareas (4.i) of the temperature control surface (4) is controlled by means of different temperature control regimes of the subareas (4.i) of the temperature control surface (4) and wherein the temperature control takes place in a rear space (3) open towards the surrounding atmosphere.

2. Method according to claim 1,
**characterised in that**
during temperature control by means of water as the temperature control medium, this is distributed on the temperature control surface (4) and/or on the subareas (4.i) of the temperature control surface (4) by means of extensive sprinkling, so that these are wetted over their entire surface and a liquid film is formed.

3. Method according to one of the above claims,
**characterised in that**
the temperature ranges of convection, bubble evaporation, partial and/or stable film evaporation are shifted by the admixture of soluble constituents to the cooling fluid water.

4. Method according to one of the above claims,
**characterised in that**
the temperature ranges of convection, bubble evaporation and/or partial and/or stable film evaporation are shifted by a chemical or physical coating of the temperature control surface (4).

5. Device for carrying out the method according to claims 1 to 4 for near-contour surface temperature control of shell-shaped moulds (14) with mould rim zones (1), wherein the mould rim zones (1) have a temperature control surface (4) on the rear space (3) opposite the respective engraving (5) or contour (5) with subareas (4.i) and the shell-shaped moulds (14) are designed in two or more parts with the respective mould rim zones (1),
**characterised in that**
the subareas (4.i) of the temperature control surface (4) have an irregular, polygonal layout plan and are bounded on the side by means of wall-like separating-passing elements (10), the subareas form a polyhedron-like space with the wall-like separating-passing elements (10).

6. Device according to a claim 5,
**characterised in that**
the separating-passing elements (10) have breakthroughs (15, a).

7. Device according to one of the claims 5 and 6,
**characterised in that**
the separating-passing elements (10) are connected to the temperature control surface (4) and/or worked out from the mould rim zones (1).

8. Device according to one of the above claims 5 to 7.
**characterised in that**
the separating-passing elements (10) each have different heights.

9. Device according to one of the above claims 5 to 8.
**characterised in that**
the separating-passing elements (10) are flat, wavy and/or concave.

10. Device according to one of the above claims 5 to 9.
**characterised in that**
the separating-passing elements (10) have a discontinuous cross-section.

11. Device according to one of the above claims 5 to 10,
**characterised in that**
the respective temperature control surface (4) and/or the subareas (4.i) are conditioned by a chemical and/or physical coating and/or by mechanical surface structuring.

## Revendications

1. Procédé de régulation de température de surface proche du contour d'outils de moulage (14) en forme de coquille avec des coques de bord d'outils de moulage (1), selon lequel la régulation de température de l'outil de moulage (14) se fait sur une surface de régulation de température proche du contour (4) avec des sections contiguës (4.i) en forme de toile ou de paroi de la zone arrière (3) respective des coques de bord d'outil de moulage (1) de l'outil de moulage (14) et/ou de la coque de bord d'outil de moulage (1) respective de l'outil de moulage (14) et selon lequel les outils de moulage (14) en forme de coque sont conçus avec les coques de bord d'outil de moulage (1) respectives en deux ou plusieurs parties,
**caractérisé en ce que**
la régulation de température en terme de refroidissement sous forme de thermorégulation sur la surface de régulation de température (4) est effectuée à différents endroits dans les sous-régions (4.i) de la surface de régulation de température (4) en fonction des plages de température de convection, d'évaporation de bulles, d'évaporation partielle et/ou à film stable de l'eau de refroidissement liquide, sachant que la thermorégulation de la surface de régulation de température (4) et/ou de la répartition de la température dans les différentes sous-régions (4.i) de la surface de régulation de température (4) se fait au moyen de différents régimes de régulation de température des sous-régions (4.i) de la surface de régulation de température (4) et que la régulation de température a lieu dans une chambre arrière (3) ouverte vers l'atmosphère environnante.

2. Procédé selon la revendication 1,
**caractérisé en ce que**
lorsque la régulation de température est effectuée en utilisant l'eau comme milieu de régulation de la température, celle-ci est répartie par aspersion sur la surface de régulation de température (4) et/ou sur les sous-régions (4.i) de la surface de régulation de température (4) de sorte que celles-ci soient mouillées et qu'un film liquide se forme.

3. Procédé selon l'une des revendications précédentes,
**caractérisé en ce que**
un déplacement des plages de température de la convection, de l'évaporation par bulles, de l'évaporation partielle et/ou par film stable a lieu par l'ajout de composants solubles à l'eau du liquide de refroidissement.

4. Procédé selon l'une des revendications précédentes,
**caractérisé en ce que**
un déplacement des plages de température de la convection, de l'évaporation de bulles et/ou de l'évaporation partielle et/ou par film stable est effectué par un revêtement chimique ou physique de la surface de régulation de température (4).

5. Dispositif pour la mise en œuvre du procédé selon les revendications 1 à 4 pour la régulation de température de surface proche du contour d'outils de moulage en forme de coquille (14) avec des coques de bord d'outil de moulage (1), selon lequel les coques de bord d'outil de moulage (1) présentent une surface de régulation de température (4) avec des zones partielles (4.i) sur l'espace arrière (3) opposé à la gravure (5) ou au contour (5) respectif et selon lequel les outils de moulage en forme de coquille (14) sont réalisés en deux ou plusieurs sous-régions avec les coques de bord d'outil de moulage (1) respectives,
**caractérisé en ce que**
les sous-régions (4.i) de la surface de régulation de température (4) ont un plan de base polygonal irrégulier et sont délimitées latéralement par des éléments de séparation en forme de paroi (10), les dites sous-régions (4.i) formant un espace polyédrique avec les éléments de séparation en forme de paroi (10).

6. Dispositif selon une revendication 5,
**caractérisé en ce que**
les éléments de séparation et de passage (10) ont des ouvertures (15, a).

7. Dispositif selon l'une des revendications précédentes 5 et 6,
**caractérisé en ce que**
les éléments de séparation et de passage (10) sont reliés à la surface de régulation de température (4) et/ou sont travaillés à partir des coques de bord de l'outil de moulage (1).

8. Dispositif selon l'une des revendications précédentes 5 à 7,
**caractérisé en ce que**
les éléments de séparation et de passage (10) ont des hauteurs différentes respectivement.

9. Dispositif selon l'une des revendications précédentes 5 à 8,
**caractérisé en ce que**
**en ce que** les éléments de séparation et de passage (10) sont plats, ondulés et/ou courbés.

10. Dispositif selon l'une des revendications précédentes 5 à 9,
**caractérisé en ce que**
les éléments de séparation et de passage (10) ont une forme de section transversale discontinue.

11. Dispositif selon l'une des revendications précédentes 5 à 10
**caractérisé en ce que**
la surface de régulation de température respective (4) et/ou les sous-régions (4.i) sont conditionnées par un revêtement chimique et/ou physique et/ou par une structuration mécanique de la surface.
